# EUROPEAN PATENT APPLICATION

(11) **EP 4 207 727 A1**
(43) Date of publication of application: **05.07.2023**
(21) Application number: 21861487.3
(22) Date of filing: 23.08.2021
(51) Int. Cl.: H04M 11/00, H04W 8/20, H04L 51/00, H04W 4/12

(54) **INFORMATION PROCESSING DEVICE, INFORMATION PROCESSING METHOD, COMMUNICATION SYSTEM, AND ENTITY**

(30) Priority: 31.08.2020 JP 2020146426
(71) Applicant: Sony Group Corporation, Minato-Ku, Tokyo, 108-0075 (JP)
(72) Inventor: TAKANO, Hiroaki, Tokyo 108-0075 (JP); KURIKI, Hiroto, Tokyo 108-0075 (JP); TSUDA, Shinichiro, Tokyo 108-0075 (JP)
(74) Representative: Witte, Weller & Partner Patentanwälte mbB
(86) International application number: PCT/JP2021/030785
(87) International publication number: WO 2022/045061

(57) **Abstract**

In an information processing device having a function of a push notification server, messages and the like are exchanged by a simple procedure. The information processing device according to the present disclosure has a function of performing push notification. An information processing device having a function of performing the push notification is disposed in a local area network (LAN) including a base station device to which a terminal device is connected and a core network, and performs the push notification to the terminal device on the basis of a connectionless protocol.

## Description

### Field

The present disclosure relates to an information processing device, an information processing method, a communication system, and an entity.

### Background

An application that exchanges a message between a plurality of terminal devices is used. In such an application, messages are exchanged via a server of a service provider. Specifically, the message from the terminal device is transferred to the server of the service provider. Next, the server of the service provider transmits the message to another terminal device. As a result, messages can be exchanged between the terminal devices. When one terminal device stops the connection to the network, the message addressed to the terminal device is accumulated in the server of the service provider. When the terminal device is connected to the network, the accumulated message is transmitted from the server of the service provider. A pull method and a push method are used as a transmission method of this message.

The pull method is a method in which a terminal device connected to a network inquires of a server of a service provider about the presence of a message addressed to the terminal device itself. Since the message is transmitted after waiting for an inquiry from the terminal device side, there is a problem that a delay occurs.

On the other hand, the push method is a method in which a server holding a message transmits a message to a terminal device connected to a network. Compared with the pull method, a delay of sending a message can be shortened. In this push method, in addition to the server of the service provider, a push notification server that is a server holding a message addressed to a terminal device that has stopped connection to the network is used. This push notification server is located on the same public network (for example, the Internet) as the service provider's server.

### Citation List

### Patent Literature

Patent Literature 1: US 2016/241605 A

### Summary

### Technical Problem

However, in the above related art, the terminal device needs to exchange messages with a push notification server disposed in a public network, and there is a problem that a procedure is complicated.

Therefore, the present disclosure proposes an information processing device, an information processing method, a communication system, and an entity having a function of a push notification server capable of exchanging messages by a simple procedure.

### Solution to Problem

To solve the problems described above, an information processing device according to an embodiment of the present disclosure is disposed in a local area network (LAN) including a base station device to which a terminal device is connected and a core network, and has a function of performing push notification to the terminal device on the basis of a connectionless protocol.

### Brief Description of Drawings

FIG. 1 is a diagram for describing an overview of a communication system according to an embodiment of the present disclosure.
FIG. 2 is a diagram illustrating an example of 5G architecture.
FIG. 3 is a diagram illustrating an example of a 4G architecture.
FIG. 4 is a block diagram illustrating a configuration example of a base station device according to an embodiment of the present disclosure.
FIG. 5 is a block diagram illustrating a configuration example of a terminal device according to an embodiment of the present disclosure.
FIG. 6 is a block diagram illustrating a configuration example of an information processing device according to an embodiment of the present disclosure.
FIG. 7 is a diagram illustrating a communication system according to an embodiment of the present disclosure in a simplified manner.
FIG. 8 is a sequence diagram illustrating a procedure of a push communication process according to a first embodiment of the present disclosure.
FIG. 9 is a sequence diagram illustrating a procedure of a push communication process according to a second embodiment of the present disclosure.
FIG. 10 is a diagram illustrating a connection cycle and a connection period to a network according to a third embodiment of the present disclosure.
FIG. 11 is a sequence diagram illustrating a procedure of a push communication process according to the third embodiment of the present disclosure.
FIG. 12 is a sequence diagram illustrating a procedure of a push communication process according to a fourth embodiment of the present disclosure.
FIG. 13 is a sequence diagram illustrating another procedure of the push communication process according to the fourth embodiment of the present disclosure.
FIG. 14 is a sequence diagram illustrating another procedure of the push communication process according to the fourth embodiment of the present disclosure.
FIG. 15 is a sequence diagram illustrating a procedure of a push communication process according to a fifth embodiment of the present disclosure.
FIG. 16 is a sequence diagram illustrating another procedure of the push communication process according to the fifth embodiment of the present disclosure.
FIG. 17 is a diagram illustrating a communication system according to a sixth embodiment of the present disclosure in a simplified manner.
FIG. 18 is a diagram illustrating correspondence between a terminal device and a UPF according to the sixth embodiment of the present disclosure.

### Description of Embodiments

Hereinafter, embodiments of the present disclosure will be described in detail with reference to the accompanying drawings. Note that, in the present specification and the drawings, components having substantially the same functional configuration are denoted by the same reference numerals, and redundant description is omitted.

In addition, in the present specification and the drawings, similar components of the embodiments may be distinguished by attaching different alphabets after the same reference numerals. However, in a case where it is not necessary to particularly distinguish each of similar components, only the same reference numeral is assigned.

One or more embodiments (including examples and modifications) described below can each be realized independently. On the other hand, at least some of the plurality of embodiments described below may be appropriately combined with at least some of other embodiments. The plurality of embodiments may include novel features different from each other. Therefore, the plurality of embodiments can contribute to solving different objects or problems, and can exhibit different effects.

Note that the description will be given in the following order.
1. Schematic configuration of system
2. Configuration example of communication system
   2.1. Configuration example of network architecture
   2.2. Base station device
   2.3. Terminal device
   2.4. Information processing device
3. Overview of proposed system
4. First embodiment
5. Second embodiment
6. Third embodiment
7. Fourth embodiment
8. Fifth Embodiment
9. Sixth Embodiment

### <<1. Schematic configuration of system>>

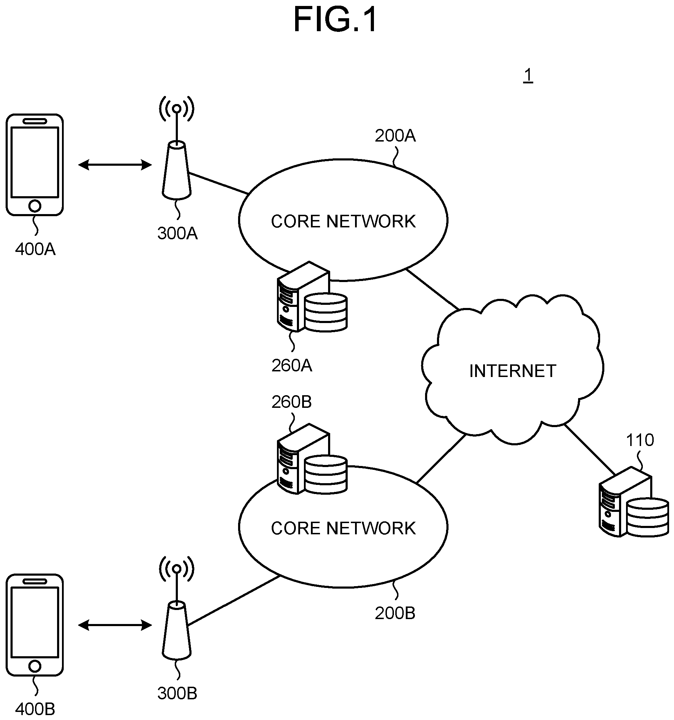

First, an overview of a communication system 1 according to an embodiment of the present disclosure will be described with reference to FIG. 1. FIG. 1 is a diagram for describing an overview of a communication system according to an embodiment of the present disclosure.

In the example illustrated in FIG. 1, the communication system 1 includes an information processing device 110, core networks 200A and 200B, base station devices 300A and 300B, and terminal devices 400A and 400B.

The information processing device 110 is a server (device) that provides the terminal device 400 with an application function. Hereinafter, the information processing device 110 is referred to as an application server 110.

The application server 110 performs communication in synchronization with the plurality of terminal devices 400. For example, the application server 110 is a game server that provides a network game to the plurality of terminal devices 400. In this case, the application server 110 distributes, for example, Augmented Reality (AR)/Virtual Reality (VR) data, which is game data, to the plurality of terminal devices 400 in synchronization.

Furthermore, the application server 110 can be, for example, a server for Internet of Things (IoT) control. For example, the application server 110 may be a control server that causes a plurality of automobiles (an example of the terminal device 400) to travel in line. In this case, for example, the application server 110 controls the plurality of automobiles in synchronization with the timing. For example, the application server 110 synchronously distributes IoT control information (for example, control information of an automobile) to the plurality of terminal devices 400.

The core network 200 is a local cellular network such as a local 5G or a local 4G. The core network 200 includes, for example, an information processing device 260 having a function of an application function (AF) node.

The information processing device 260 transmits the transmission data transmitted by the application server 110 to the terminal device 400. For example, the information processing device 260 may be a push notification server that transmits transmission data to the terminal device 400 by push notification.

The base station device 300 is a wireless communication device that performs wireless communication with the terminal device 400. The base station device 300 is a type of communication device. Furthermore, the base station device 300 is a type of information processing device.

The terminal device 400 is a wireless communication device that performs wireless communication with the base station device 300. The terminal device 400 is, for example, a mobile phone, a smart device (smartphone or tablet), a personal digital assistant (PDA), or a personal computer. Furthermore, the terminal device 400 may be an M2M (Machine to Machine) device or an IoT (Internet of Things) device. Furthermore, the terminal device 400 may be a head mounted display, VR goggles, or the like.

The terminal device 400 is connected to the core network 200 via the base station device 300.

### <<2. Configuration example of communication system>>

### <2.1. Configuration example of network architecture>

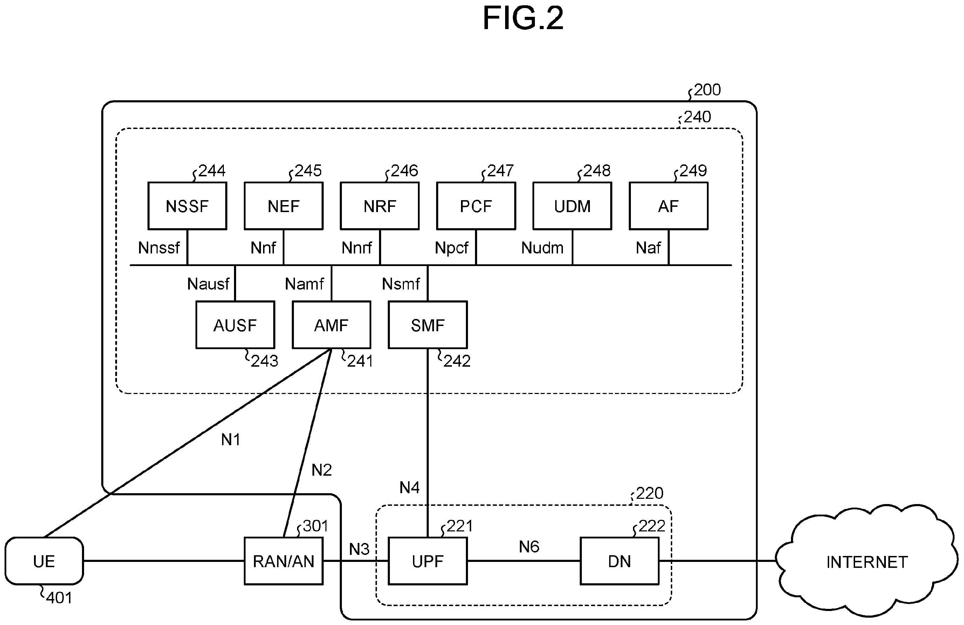

Next, an architecture of a fifth generation mobile communication system (5G) will be described as an example of the core network 200 of the communication system 1 with reference to FIG. 2. FIG. 2 is a diagram illustrating an example of 5G architecture. The 5G core network 200 is also referred to as 5GC (5G Core)/NGC (Next Generation Core). Hereinafter, the 5G core network 200 is also referred to as a 5GC/NGC 200. The 5GC/NGC 200 is connected to user equipment (UE) 401 via a (R)AN 301.

The (R)AN 301 has a function of enabling connection to a radio access network (RAN) and connection to an access network (AN) other than the RAN. The (R)AN 301 includes a base station device called a gNB or an ng-eNB.

The 5GC/NGC 200 mainly performs connection permission and session management when the UE 400 connects to the network. The 5GC/NGC 200 may include a user plane function group 220 and a control plane function group 240.

The user plane function group 220 includes a user plane function (UPF) 221 and a data network (DN) 222. The UPF 221 has a function of user plane processing. The UPF 221 includes a routing/forwarding function of data handled in a user plane. The DN 222 has a function of providing an entity, such as a mobile network operator (MNO), which provides a connection to an operator's own service, providing an Internet connection, or providing a connection to a third party service. As described above, the user plane function group 220 serves as a gateway serving as a boundary between the 5GC/NGC 200 and the Internet.

The control plane function group 240 includes an access management function (AMF) 241, a session management function (SMF) 242, an authentication server function (AUSF) 243, a network slice selection function (NSSF) 244, a network exposure function (NEF) 245, a network repository function (NRF) 246, a policy control function (PCF) 247, a unified data management (UDM) 248, and an application function (AF) 249.

The AMF 241 has functions such as registration process, connection management, and mobility management of the UE 401. The SMF 242 has functions such as session management and IP assignment and management of the UE 401. The AUSF 243 has an authentication function. The NSSF 244 has a function related to selection of a network slice. The NEF 245 has a function of providing network function capabilities and events to a third party, the AF 249, and edge computing functions.

The NRF 246 has a function of finding a network function and holding a profile of the network function. The PCF 247 has a function of policy control. The UDM 248 has functions of generating 3GPP AKA authentication information and processing a user ID. The AF 249 has a function of interacting with the core network to provide a service.

For example, the control plane function group 240 acquires information from the UDM 248 in which the subscriber information of the UE 401 is stored, and determines whether or not the UE 401 may connect to the network. The control plane function group 240 uses the contract information of the UE 401 and the key for encryption included in the information acquired from the UDM 248 for such determination. In addition, the control plane function group 240 generates a key for encryption and the like.

That is, the control plane function group 240 determines whether or not the network can be connected according to whether or not information of the UE 401 associated with a subscriber number called international mobile subscriber identity (IMSI) is stored in the UDM 248, for example. Note that the IMSI is stored in, for example, a subscriber identity module (SIM) card in the UE 401.

Here, Namf is a service-based interface provided by the AMF 241, and Nsmf is a service-based interface provided by the SMF 242. In addition, Nnef is a service-based interface provided by the NEF 245, and Npcf is a service-based interface provided by the PCF 247. Nudm is a service-based interface provided by the UDM 248, and Naf is a service-based interface provided by the AF 249. Nnrf is a service-based interface provided by the NRF 246, and Nnssf is a service-based interface provided by the NSSF 244. Nausf is a service-based interface provided by the AUSF 243. Each of these network functions (NFs) exchanges information with another NF via each service-based interface.

In addition, N1 illustrated in FIG. 1 is a reference point between the UE 401 and the AMF 241, and N2 is a reference point between the RAN/AN 301 and the AMF 241. N4 is a reference point between the SMF 242 and the UPF 221, and information is exchanged between these network functions (NFs).

As described above, in the 5GC/NGC 200, an interface for transmitting information and controlling functions via an application programming interface (API) called a service-based interface is prepared.

The API specifies a resource and enables GET (resource acquisition), POST (Creation of resource and addition of data), PUT (create resource, update resource), DELETE (resource deletion), and the like for the resource. Such a function is generally used, for example, in the technical field related to the Web.

For example, when establishing a communication session, the AMF 241, the SMF 242, and the UDM 248 illustrated in FIG. 2 exchange information with each other using the API. Conventionally, it is not assumed that an application (for example, AF 249) uses such an API. However, when AF 249 uses such an API, AF 249 can use information of a 5G cellular network, and it is considered that a function of an application can be further evolved.

Note that it is difficult for the AF 289 to use the API used by the AMF 241, the SMF 242, and the UDM 248 in the Public Network. However, in the case of a non-public private 5G network, it is considered that the system can be configured including, for example, a change in the API of the 5GC/NGC 200 so that the AF 289 can use such an API.

Here, an example of the API will be described. The API(1) to API(4) described here are described in 3GPP TS 23.502.

### [API(1)]

The API(1) is an API in which the SMF 242 notifies that the UE 401 registered in advance transitions from the power off state to the power on state and attaches to the network and the IP address acquired at that time.

The SMF 242 notifies the NF of the IP address when the UE 401 of the registered IMSI acquires the IP address by using the API(1).

### [API(2)]

The UE 401 enters the Idle mode when not communicating, and transitions to the Connected mode when communicating. The API(2) is an API in which the AMF 241 notifies whether the UE 401 is in the Idle mode or the Connected mode.

### [API(3)]

The API(3) is an API for broadcasting a message (Paging message) for instructing the UE 401 to transition from the Idle mode to the Connected mode from the base station.

### [API(4)]

The API(4) is an API in which the AMF 241 provides the location information of the UE 401. The AMF 241 may use the API(4) to inform which tracking area the UE 401 is in, which cell it belongs to, and when it enters a specific region.

Note that an example of the UE 401 in FIG. 2 is the terminal device 400 of the present embodiment. An example of the RAN/AN 301 is the base station device 300 according to the present embodiment.

Furthermore, the information processing device 260 illustrated in FIG. 1 is an example of a device having the function of, for example, the AF 249 or the AMF 241. The application server 110 is connected to the core network 200 via the Internet, and is not illustrated in FIG. 2.

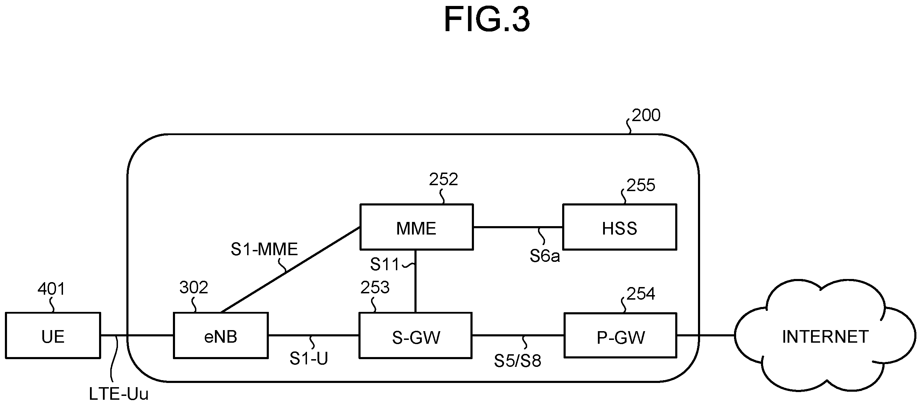

An architecture of a fourth generation mobile communication system (4G) will be described as an example of the core network 200 of the communication system 1 with reference to FIG. 3. FIG. 3 is a diagram illustrating an example of a 4G architecture.

As illustrated in FIG. 3, the core network 200 includes an eNB 302, a mobility management entity (MME) 252, a serving gateway (S-GW) 253, a packet data network gateway (P-GW) 254, and a home subscriber server (HSS) 255.

The eNB 302 functions as a 4G base station. The MME 252 is a control node that handles signals of a control plane (control plane) and manages a movement state of the UE 401. The UE 401 sends an Attach request to the MME 252 to attach to the cellular system.

The S-GW 253 is a control node that handles user plane signals, and is a gateway device that switches a transfer path of user data. The P-GW 254 is a control node that handles user plane signals and is a gateway device serving as a connection point between the core network 200 and the Internet. The HSS 255 is a control node that handles subscriber data and performs service control.

The MME 252 corresponds to the functions of the AMF 241 and the SMF 242 in the 5G network. In addition, the HSS 255 corresponds to the function of the UDM 248.

As illustrated in FIG. 3, the eNB 302 is connected to the MME 252 via the S1-MME interface, and is connected to the S-GW 253 via the S1-U interface. The S-GW 253 is connected to the MME 252 via the S11 interface, and the MME 252 is connected to the HSS 255 via the S6a interface. The P-GW 254 is connected to the S-GW 253 via an S5/S8 interface.

### <2.2. Base station device>

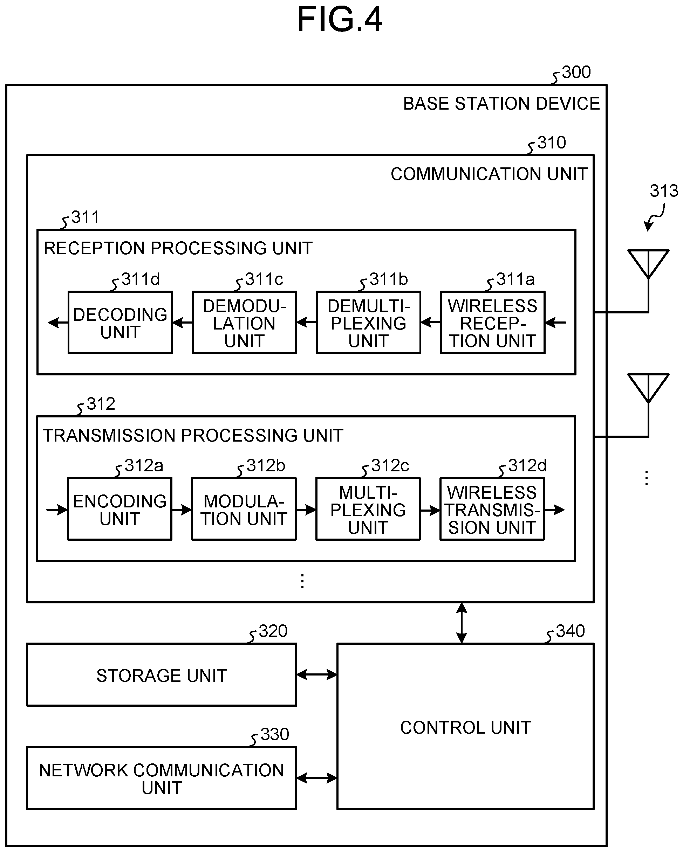

Next, a configuration example of the base station device 300 according to the embodiment of the present disclosure will be described with reference to FIG. 4. FIG. 4 is a block diagram illustrating a configuration example of the base station device according to the embodiment of the present disclosure.

The base station device 300 is a wireless communication device that performs wireless communication with the terminal device 400. The base station device 300 is a type of communication device. In addition, the base station device 300 is a type of information processing device.

The base station device 300 may be configured by a set of a plurality of physical or logical devices. For example, in the embodiment of the present disclosure, the base station device 300 may be distinguished into a plurality of devices of a baseband unit (BBU) and a radio unit (RU), and may be interpreted as an assembly of the plurality of devices. Additionally or alternatively, in the embodiment of the present disclosure, the base station device 300 may be either or both of a BBU and an RU. The BBU and the RU may be connected by a predetermined interface (for example, eCPRI). Additionally or alternatively, RU may be referred to as Remote Radio Unit (RRU) or Radio DoT (RD). Additionally or alternatively, the RU may correspond to the gNB-DU described later. Additionally or alternatively, the BBU may correspond to a gNB-CU to be described later. Additionally or alternatively, the RU may be a device integrally formed with the antenna. An antenna (for example, an antenna integrally formed with an RU) included in the base station device 300 may adopt an advanced antenna system and support MIMO (for example, FD-MIMO) or beamforming. In the advanced antenna system, an antenna (for example, an antenna integrally formed with an RU) included in the base station device 300 may include, for example, 64 transmission antenna ports and 64 reception antenna ports. In addition, the antenna mounted on the RU may be an antenna panel including one or more antenna elements, and the RU may be mounted with one or more antenna panels. For example, the RU may be mounted with two antenna panels of a horizontally polarized antenna panel and a vertically polarized antenna panel, or two antenna panels of a clockwise circularly polarized antenna panel and a counterclockwise circularly polarized antenna panel. In addition, the RU may form and control an independent beam for each antenna panel.

Furthermore, a plurality of the base station devices 300 may be connected to each other. One or more base station devices 300 may be included in a radio access network (RAN). That is, the base station device 300 may be simply referred to as a RAN, a RAN node, an access network (AN), or an AN node. The RAN in LTE is referred to as an enhanced universal terrestrial RAN (EUTRAN). RAN in NR is referred to as NGR_AN. RAN in W-CDMA (UMTS) is referred to as UTRAN. The base station device 300 in LTE is referred to as an evolved node B (eNodeB) or an eNB. That is, the EUTR_AN includes one or more eNodeBs (eNBs). Furthermore, the base station device 300 of NR is referred to as a gNodeB or a gNB. That is, the NGR_AN includes one or more gNBs. Further, the EUTR_AN may include a gNB (en-gNB) connected to a core network (EPC) in an LTE communication system (EPS). Similarly, the NGR_AN may include an ng-eNB connected to a core network 5GC in a 5G communication system (5GS). Additionally or alternatively, when the base station device 300 is an eNB, a gNB, or the like, it may be referred to as 3GPP Access. Additionally or alternatively, when the base station device 300 is a wireless access point, it may be referred to as Non-3GPP Access. Additionally or alternatively, the base station device 300 may be an optical extension device called a remote radio head (RRH). Additionally or alternatively, in a case where the base station device 300 is a gNB, the base station device 300 may be referred to as a combination of the above-described gNB CU (Central Unit) and gNB DU (Distributed Unit) or any one of them. The gNB CU (Central Unit) hosts a plurality of upper layers (for example, RRC, SDAP, PDCP) of the Access Stratum for communication with the UE. On the other hand, the gNB-DU hosts a plurality of lower layers (for example, RLC, MAC, PHY) of the Access Stratum. That is, among messages and information described later, RRC signalling (for example, various SIBs including a MIB and a SIB1, an RRC Setup message, and an RRC Reconfiguration message) may be generated by the gNB CU, while DCI and various physical channels (for example, PDCCH, PBCH) described later may be generated by the gNB-DU. Alternatively, in the RRC signalling, for example, some configurations such as IE: cellGroupConfig may be generated by the gNB-DU, and the remaining configurations may be generated by the gNB-CU. These configurations may be transmitted and received by an F1 interface to be described later. The base station device 300 may be configured to be able to communicate with another base station device 300. For example, in a case where the plurality of base station devices 300 are eNBs or a combination of an eNB and an en-gNB, the base station devices 300 may be connected by an X2 interface. Additionally or alternatively, in a case where the plurality of base station devices 300 are gNBs or a combination of a gn-eNB and a gNB, the devices may be connected by an Xn interface. Additionally or alternatively, in a case where the plurality of base station devices 300 is a combination of a gNB central unit (CU) and a gNB distributed unit (DU), the devices may be connected by the above-described F1 interface. Message/information (information included in RRC signalling or DCI) to be described later may be communicated between a plurality of base station devices 300 (for example, via X2, Xn, F1 interface).

Further, as described above, the base station device 300 may be configured to manage a plurality of cells. A cell provided by the base station device 300 is referred to as a serving cell. The serving cell includes a primary cell (PCell) and a secondary cell (SCell). In a case where the dual connectivity (for example, EUTRA-EUTRA Dual Connectivity, EUTRA-NR Dual Connectivity (ENDC), EUTRA-NR Dual Connectivity with 5GC, NR-EUTRA Dual Connectivity (NEDC), and NR-NR Dual Connectivity) is provided to the UE (for example, the terminal device 400), the PCell and zero or one or more SCell(s) provided by the MN (Master Node) are referred to as a master cell group. Further, the serving cell may include a PSCell (Primary Secondary Cell or Primary SCG Cell). In other words, in a case where the dual connectivity is provided to the UE, the PSCell and zero or one or more SCell(s) provided by the SN (Secondary Node) are referred to as a secondary cell group (SCG). Unless specially configured (for example, PUCCH on SCell), the physical uplink control channel (PUCCH) is transmitted in the PCell and the PSCell, but is not transmitted in the SCell. In addition, the radio link failure is also detected in the PCell and the PSCell, but is not detected in the SCell (may not be detected). As described above, since the PCell and the PSCell have a special role in the serving cell(s), they are also referred to as special cells (SpCells). One downlink component carrier and one uplink component carrier may be associated with one cell. In addition, the system bandwidth corresponding to one cell may be divided into a plurality of bandwidth parts. In this case, one or more bandwidth parts (BWP) may be configured for the UE, and one Bandwidth Part may be used for the UE as an Active BWP. Furthermore, radio resources (for example, a frequency band, a numerology (subcarrier spacing), and a slot configuration (slot configuration)) that can be used by the terminal device 400 may be different for each cell, each component carrier, or each BWP.

The base station device 300 illustrated in FIG. 4 includes a communication unit 310, a storage unit 320, a network communication unit 330, and a control unit 340. Note that the configuration illustrated in FIG. 4 is a functional configuration, and the hardware configuration may be different from the functional configuration. Furthermore, the functions of the base station device 300 may be realized in a distributed manner in a plurality of physically separated configurations.

The communication unit 310 is a signal processing unit for wirelessly communicating with another wireless communication device (for example, the terminal device 400 and another base station device 300). The communication unit 310 operates under the control of the control unit 340. When the other wireless communication device is the terminal device 400, the communication unit 310 may be a wireless transceiver supporting one or a plurality of wireless access methods. For example, the communication unit 310 supports both NR and LTE. The communication unit 310 may support W-CDMA or cdma 2000 in addition to NR or LTE. Furthermore, the communication unit 310 may support communication using NOMA. When the other wireless communication device is the other base station device 300, the communication unit 310 may be an X2 interface, an Xn interface, or an F1 interface.

The communication unit 310 includes a reception processing unit 311, a transmission processing unit 312, and an antenna 313. The communication unit 310 may include a plurality of reception processing units 311, a plurality of transmission processing units 312, and a plurality of antennas 313. Note that, in a case where the communication unit 310 supports a plurality of wireless access methods, each unit of the communication unit 310 can be configured individually for each wireless access method. For example, the reception processing unit 311 and the transmission processing unit 312 may be individually configured by LTE and NR.

The reception processing unit 311 processes the uplink signal received via the antenna 313. The reception processing unit 311 operates as a reception unit that receives a reception signal. The reception processing unit 311 includes a wireless reception unit 311a, a demultiplexing unit 311b, a demodulation unit 311c, and a decoding unit 311d.

The wireless reception unit 311a performs, on the uplink signal, down-conversion, removal of an unnecessary frequency component, control of an amplification level, quadrature demodulation, conversion to a digital signal, removal of a guard interval (cyclic prefix), extraction of a frequency domain signal by fast Fourier transform, and the like. The demultiplexing unit 311b demultiplexes an uplink channel such as a physical uplink shared channel (PUSCH) or a physical uplink control channel (PUCCH) and an uplink reference signal from the signal output from the wireless reception unit 311a.

The demodulation unit 311c demodulates the received signal using a modulation method such as binary phase shift keying (BPSK) or quadrature phase shift keying (QPSK) with respect to the modulation symbol of the uplink channel. The modulation method used by the demodulation unit 311c may be 16-quadrature amplitude modulation (QAM), 64QAM, or 256QAM. In this case, the signal points on the constellation do not necessarily have to be equidistant. The constellation may be a non-uniform constellation (NUC).

The decoding unit 311d performs a decoding process on the demodulated encoded bits of the uplink channel. The decoded uplink data and uplink control information are output to the control unit 340.

The transmission processing unit 312 performs a process of transmitting the downlink control information and the downlink data. As described above, the transmission processing unit 312 is an acquisition unit that acquires, for example, a bit sequence of downlink control information, downlink data, or the like from the control unit 340. The transmission processing unit 312 includes an encoding unit 312a, a modulation unit 312b, a multiplexing unit 312c, and a wireless transmission unit 312d.

The encoding unit 312a encodes the downlink control information and the downlink data input from the control unit 340 using an encoding method such as block encoding, convolutional encoding, turbo encoding, or the like. Note that the encoding unit 312a may perform encoding with a polar code and encoding with a low density parity check code (LDPC code).

The modulation unit 312b modulates the encoded bits output from the encoding unit 312a by a predetermined modulation method such as BPSK, QPSK, 16QAM, 64QAM, or 256QAM. In this case, the signal points on the constellation do not necessarily have to be equidistant. The constellation may be a non-uniform constellation.

The multiplexing unit 312c multiplexes the modulation symbol of each channel and the downlink reference signal and arranges the multiplexed symbols in a predetermined resource element. The wireless transmission unit 312d performs various types of signal processing on the signal from the multiplexing unit 312c. For example, the wireless transmission unit 312d performs processing such as conversion from a time domain to a frequency domain by fast Fourier transform, addition of a guard interval (cyclic prefix), generation of a baseband digital signal, conversion to an analog signal, quadrature modulation, up-conversion, removal of an extra frequency component, and power amplification. The signal generated by the transmission processing unit 312 is transmitted from the antenna 313.

The storage unit 320 is a storage device capable of reading and writing data, such as a DRAM, an SRAM, a flash memory, or a hard disk. The storage unit 320 functions as a storage unit of the base station device 300.

The network communication unit 330 is a communication interface for communicating with a node positioned at a high level on the network (for example, the information processing device 260). For example, the network communication unit 330 may be a LAN interface such as an NIC. Additionally or alternatively, the network communication unit 330 may be an S1 interface or an NG interface for connecting to the core network node. The network communication unit 330 may be a wired interface or a wireless interface. The network communication unit 330 functions as a network communication unit of the base station device 300.

The control unit 340 is a controller that controls each unit of the base station device 300. The control unit 340 is realized by, for example, a processor (hardware processor) such as a central processing unit (CPU) or a micro processing unit (MPU). For example, the control unit 340 is realized by a processor executing various programs stored in a storage device inside the base station device 300 using a random access memory (RAM) or the like as a work area. Note that the control unit 340 may be realized by an integrated circuit such as an application specific integrated circuit (ASIC) or a field programmable gate array (FPGA). Any of the CPU, the MPU, the ASIC, and the FPGA can be regarded as a controller.

### <2.3. Terminal device>

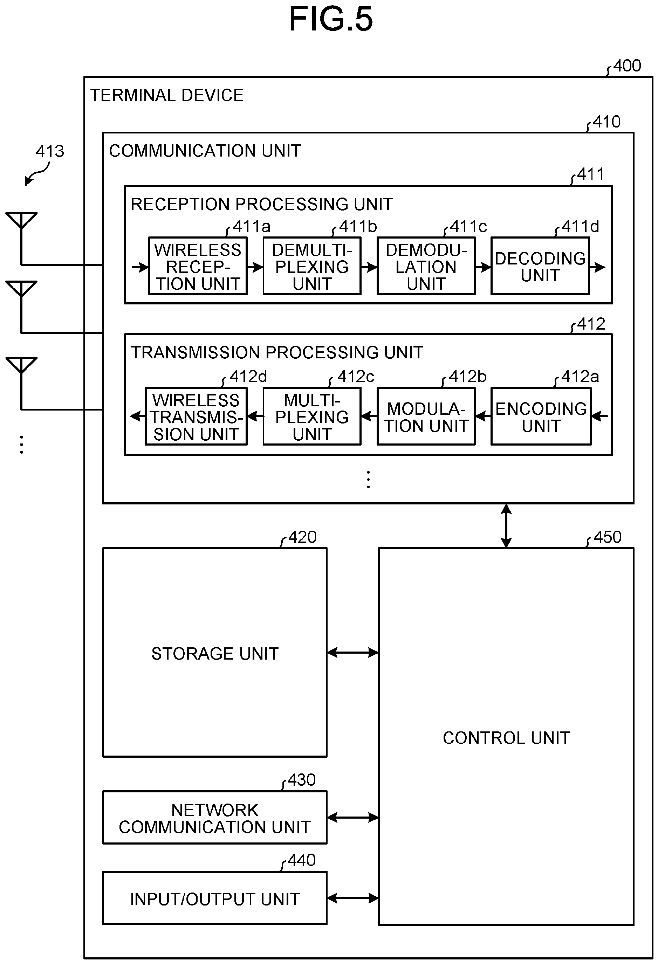

Next, a configuration example of the terminal device 400 according to the embodiment of the present disclosure will be described with reference to FIG. 5. FIG. 5 is a block diagram illustrating a configuration example of a terminal device according to an embodiment of the present disclosure.

The terminal device 400 is a wireless communication device that performs wireless communication with the base station device 300. The terminal device 400 is, for example, a mobile phone, a smart device (smartphone or tablet), a personal digital assistant (PDA), or a personal computer. The terminal device 400 may be a head mounted display having a function of wirelessly transmitting and receiving data, VR goggles, or the like.

Furthermore, the terminal device 400 may be capable of sidelink communication with another terminal device 400. The terminal device 400 may be able to use an automatic retransmission technology such as hybrid automatic repeat request (HARQ) when performing sidelink communication. The terminal device 400 may be capable of non-orthogonal multiple access (NOMA) communication with the base station device 300. Note that the terminal device 400 may also be capable of NOMA communication in communication (sidelink) with other terminal devices 400. Furthermore, the terminal device 400 may be capable of low power wide area (LPWA) communication with other communication devices (for example, the base station device 300 and another terminal device 400). In addition, the wireless communication used by the terminal device 400 may be wireless communication using millimeter waves. Note that the wireless communication (sidelink communication) used by the terminal device 400 may be wireless communication using radio waves or wireless communication (optical wireless) using infrared rays or visible light.

The terminal device 400 may be simultaneously connected to a plurality of base station devices or a plurality of cells to perform communication. For example, when one base station device can provide a plurality of cells, the terminal device 400 may perform carrier aggregation by using one cell as a pCell and using another cell as an sCell. Furthermore, in a case where a plurality of base station devices 300 can respectively provide one or a plurality of cells, the terminal device 400 can implement dual connectivity (DC) by using one or a plurality of cells managed by one base station device (MN (for example, MeNB or MgNB)) as the pCell or the pCell and the sCell(s) and using one or a plurality of cells managed by the other base station device (SN (for example, the SeNB or the SgNB)) as the pCell (PSCell) or the pCell (PSCell) and the sCell(s). The DC may be referred to as a multi connectivity (MC).

Note that, in a case where a communication area is supported via cells of different base station devices 300 (a plurality of cells having different cell identifiers or the same cell identifier), it is possible to bundle the plurality of cells and communicate between the base station device 300 and the terminal device 400 by a carrier aggregation (CA) technology, a dual connectivity (DC) technology, or a multi-connectivity (MC) technology. Alternatively, the terminal device 400 and the plurality of base station devices 300 can communicate with each other by a coordinated transmission and reception (CoMP: Coordinated Multi-Point Transmission and Reception) technology via cells of different base station devices 300.

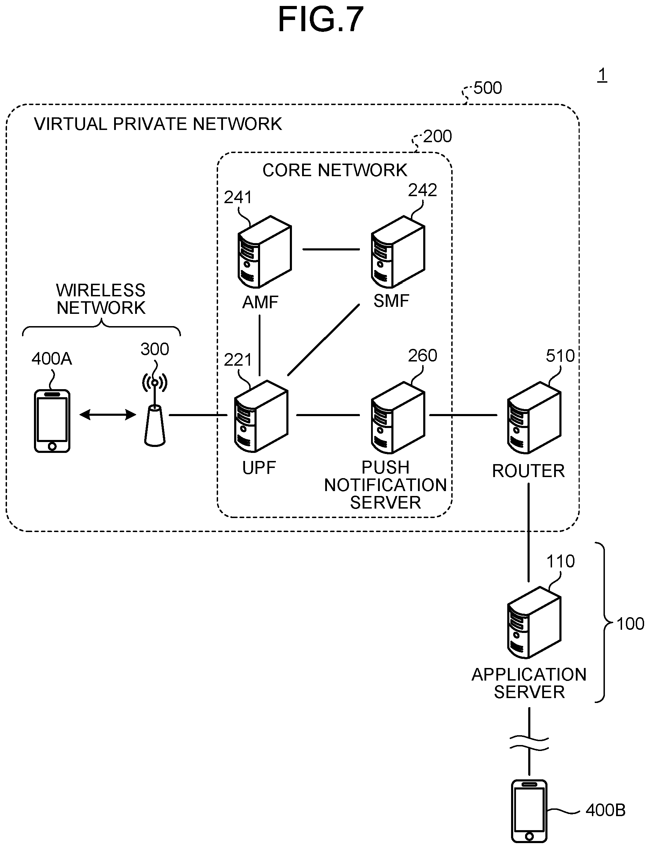

The terminal device 400 includes a communication unit 410, a storage unit 420, a network communication unit 430, an input/output unit 4400, and a control unit 450. Note that the configuration illustrated in FIG. 7 is a functional configuration, and the hardware configuration may be different from the functional configuration. Furthermore, the functions of the terminal device 400 may be realized in a distributed manner in a plurality of physically separated configurations.

The communication unit 410 is a signal processing unit for wirelessly communicating with another wireless communication device (for example, the base station device 300 and another terminal device 400). The communication unit 410 operates according to the control of the control 115. The communication unit 410 may be a wireless transceiver corresponding to one or a plurality of wireless access methods. For example, the communication unit 41 supports both NR and LTE. The communication unit 410 may support W-CDMA or cdma 2000 in addition to NR or LTE. Furthermore, the communication unit 410 may support communication using NOMA.

The communication unit 410 includes a reception processing unit 411, a transmission processing unit 412, and an antenna 413. The communication unit 410 may include a plurality of reception processing units 411, a plurality of transmission processing units 412, and a plurality of antennas 413. The configurations of the communication unit 410, the reception processing unit 411, the transmission processing unit 412, and the antenna 414 are similar to those of the communication unit 310, the reception processing unit 311, the transmission processing unit 312, and the antenna 314 of the base station device 300.

The storage unit 420 is a storage device capable of reading and writing data, such as a DRAM, an SR_AM, a flash memory, or a hard disk. The storage unit 420 functions as a storage unit of the terminal device 400.

The network communication unit 430 is a communication interface for communicating with other devices connected via a network. For example, the network communication unit 430 is a LAN interface such as an NIC. The network communication unit 430 may be a wired interface or a wireless interface. The network communication unit 430 functions as a network communication unit of the terminal device 400. The network communication unit 430 communicates with other devices under the control of the control unit 450.

The input/output unit 440 is a user interface for exchanging information with the user. For example, the input/output unit 440 is an operation device for the user to perform various operations, such as a keyboard, a mouse, an operation key, and a touch panel. Alternatively, the input/output unit 440 is a display device such as a liquid crystal display or an organic electroluminescence (EL) display. The input/output unit 440 may be an acoustic device such as a speaker or a buzzer. The input/output unit 440 may be a lighting device such as a light emitting diode (LED) lamp. The input/output unit 440 functions as an input/output unit (input means, output means, operation means, or notification means) of the terminal device 400.

The control unit 450 is a controller that controls each unit of the terminal device 400. The control unit 450 is realized by, for example, a processor such as a CPU, an MPU, or a GPU. For example, the control unit 450 is realized by a processor executing various programs stored in a storage device inside the terminal device 400 using a RAM or the like as a work area. Note that the control unit 450 may be realized by an integrated circuit such as an ASIC or an FPGA. Any of the CPU, the MPU, the GPU, the ASIC, and the FPGA can be regarded as a controller.

### <2.4. Information processing device>

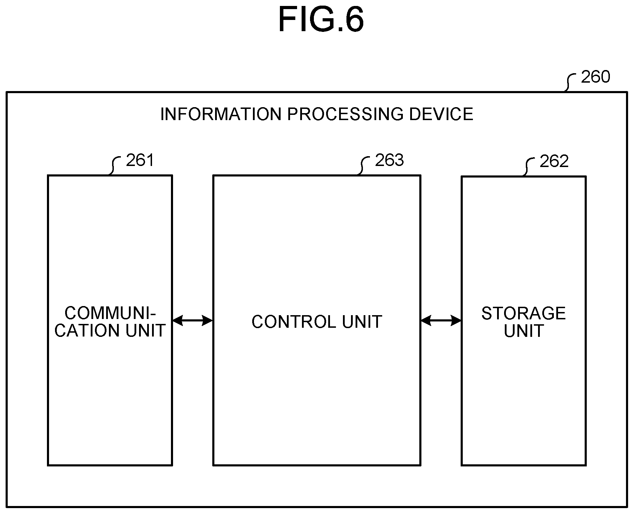

Next, a configuration example of the information processing device 260 according to the embodiment of the present disclosure will be described with reference to FIG. 6. FIG. 6 is a block diagram illustrating a configuration example of an information processing device according to an embodiment of the present disclosure.

The information processing device 260 is a device that realizes a function of NF or AF of the core network 200. The information processing device 260 is, for example, a server device. The information processing device 260 may be a device collectively referred to as a cloud server or an edge server.

As illustrated in FIG. 6, the information processing device 260 includes a communication unit 261, a storage unit 262, and a control unit 263. Note that the configuration illustrated in FIG. 6 is a functional configuration, and the hardware configuration may be different from the functional configuration. Furthermore, the functions of the information processing device 260 may be realized in a distributed manner in a plurality of physically separated configurations. For example, the information processing device 260 may include a plurality of server devices.

The communication unit 261 is a communication interface for communicating with other devices. The communication unit 261 may be a network interface or a device connection interface. For example, the communication unit 261 may be a local area network (LAN) interface such as a network interface card (NIC), or may be a USB interface including a universal serial bus (USB) host controller, a USB port, and the like. Furthermore, the communication unit 261 may be a wired interface or a wireless interface. The communication unit 261 functions as a communication unit of the information processing device 260. The communication unit 261 communicates with the base station device 300, another NF node, or an AN node under the control of the control unit 263.

The storage unit 262 is a data readable/writable storage device such as a dynamic random access memory (DRAM), a static random access memory (SRAM), a flash memory, or a hard disk. The storage unit 262 functions as a storage unit of the information processing device 260.

The control unit 263 is a controller that controls each unit of the information processing device 260. The control unit 263 is realized by, for example, a processor such as a central processing unit (CPU), a micro processing unit (MPU), or a graphics processing unit (GPU). For example, the control unit 263 is realized by a processor executing various programs stored in a storage device inside the information processing device 260 using a random access memory (RAM) or the like as a work area. Note that the control unit 263 may be realized by an integrated circuit such as an application specific integrated circuit (ASIC) or a field programmable gate array (FPGA). Any of the CPU, the MPU, the GPU, the ASIC, and the FPGA can be regarded as a controller.

### <<3. Overview of proposed system>>

An overview of a communication system 1 according to an embodiment of the present disclosure will be described with reference to FIG. 7. FIG. 7 is a diagram illustrating a communication system according to an embodiment of the present disclosure in a simplified manner.

The communication system 1 of FIG. 7 includes a local area network (LAN). In FIG. 7, a virtual private network 500 is applied as an example of the LAN. Here, the private network corresponds to the non-public network described above, and is a private network different from a public network such as the Internet. For example, the network is a network that targets a specific area such as a factory and is generally not opened. In addition, the virtual private network is a network extended across a public network and the like. The virtual private network 500 includes a wireless network including a terminal device 400A and a base station device 300, a core network 200, and a router 510.

In the core network 200 of FIG. 7, the AMF 241, the SMF 242, the UPF 221, and the information processing device 260 have been described. Note that the information processing device 260 corresponds to the information processing device 260 having the push notification function described in FIG. 1. Hereinafter, the information processing device 260 will be referred to as a push notification server 260. The push notification server 260 can hold the message transmitted to itself in the storage unit 262 described in FIG. 6. Note that FIG. 7 illustrates an example in which the push notification server 260 is arranged in the core network 200. The push notification server 260 may also be located outside the core network 200. In either case, the push notification server 260 is located inside the virtual private network 500. The router 510 is a router that connects the virtual private network 500 and the Internet 100.

The application server 110 described in FIG. 1 is connected to the Internet 100. The server of a service provider can be applied to the application server 110. Furthermore, as an application of the application server 110, an application that exchanges messages between a plurality of terminal devices connected to a network is assumed. In FIG. 6, it is assumed that messages are exchanged between the terminal device 400A and the terminal device 400B. Such a message is referred to as an instant message.

A message transmission/reception procedure in the communication system 1 of FIG. 7 will be described. It is assumed that a message is transmitted from the terminal device 400B to the terminal device 400A. The user of the terminal device 400A transmits information such as his/her own e-mail address or telephone number and registers the information in the application of the application server 110. The application of the application server 110 manages the terminal device 400A using an identifier (ID) associated with the electronic mail address or the like.

First, the terminal device 400A registers in the push notification server 260. As a response, the terminal device 400A receives the token from the push notification server 260. This token is used for identification of the terminal device 400A when a message is transmitted.

Next, the user of the terminal device 400B generates a message and transmits the message to the ID of the terminal device 400A. This message is held in the application server 110. Next, the held message from the terminal device 400B is transmitted to the push notification server 260 by the application of the application server 110. The transmission of the message may be performed based on a transmission control protocol (TCP). A TCP connection is set between the application server 110 and the push notification server 260. With this TCP connection, a message can be transmitted from the application server 110 of the Internet 100 to the push notification server 260 in the virtual private network 500 via the router 510.

When the terminal device 400A is connected to the wireless network of the LAN 500 and the core network 200, the push notification server 260 immediately transmits a message to the terminal device 400A. The transmission of the message can be performed based on a connectionless protocol. For example, it can be performed based on a user datagram protocol (UDP). This is because it is not necessary to set a TCP connection since a private IP address is used for a device arranged inside the virtual private network 500. As a result, the terminal device 400A can receive the message from the terminal device 400B. The user of the terminal device 400A can read the message.

On the other hand, in a case where the terminal device 400A is not connected to the wireless network of the virtual private network 500 and the core network 200, for example, in a case where the power supply of the terminal device 400A is turned off, the push notification server 260 waits until the terminal device 400A is connected to the wireless network and the core network 200. At this time, the message is held and accumulated in the push notification server 260. When the terminal device 400A is connected to the wireless network and the core network 200, the push notification server 260 performs push notification and transmits a message to the terminal device 400A.

As described above, by arranging the push notification server 260 inside the virtual private network 500, it is possible to exchange messages with the terminal device 400A on the basis of UDP which is a connectionless protocol. The UDP is a protocol in which a process such as handshaking at the time of transmitting a message is omitted, and can easily transmit a message.

On the other hand, in TCP, it is necessary to establish a connection in advance, and transmission of a message becomes complicated. Specifically, the TCP connection is established by a procedure called three-way handshake in which three packets are transmitted and received. When a device that frequently repeats connection to and disconnection from a network, such as an IoT device, is used, the number of times of establishment of a TCP connection increases, and the processing load and power consumption of the push notification server 260 increase.

In addition, even in a case where the TCP connection is maintained for a long period of time for continuous push notification, the load on the push notification server 260 and the terminal device 400A increases. This is because it is necessary to periodically transmit and receive packets in order to maintain the TCP connection. When a large number of terminal devices are connected, the burden on the push notification server 260 further increases. In addition, in a case where a TCP connection is maintained with a large number of terminal devices, a problem of depletion of IP address resources occurs. This is because an IP address is assigned to each terminal device. By transmitting a message based on UDP which is a connectionless protocol, a transmission procedure between the terminal device 400A and the push notification server 260 can be simplified.

On the other hand, in a case where the push notification server 260 is disposed outside the virtual private network 500, transmission of a message based on UDP cannot be applied, and it is necessary to transmit a message based on TCP. In the virtual private network 500, the private IP address is applied to a device such as the terminal device 400A. In a case where a packet is transmitted from the terminal device 400A to the outside of the virtual private network 500, the private IP address is converted into a public IP address and transmitted. By receiving the packet to which the public IP address is added, a server or the like disposed outside the virtual private network 500 can grasp the public IP address of the terminal device 400A. That is, in a case where the push notification server 260 is disposed outside the virtual private network 500, since the public IP address of the terminal device 400A is not acquired, the push notification based on UDP cannot be performed.

Note that translation from the private IP address to the public IP address can be performed by network address translation (NAT). NAT is usually performed in a gateway.

On the other hand, in a case where a TCP connection is set between the terminal device 400A and the push notification server 260, push notification from the outside of the virtual private network 500 becomes possible. By establishing a TCP connection starting from the terminal device 400A, a packet is transmitted from the terminal device 400A side to the push notification server 260. By receiving this packet, the push notification server 260 can acquire the IP address of the terminal device 400A before the push notification.

There are also systems that do not use the above-described NAT, such as Internet Protocol version 6 (IPv6). In such a system, it is also possible to transmit a packet by UDP from the outside of the virtual private network 500. However, in such a system, NAT is not performed, which causes a security problem.

These problems can be solved by arranging the push notification server 260 inside the virtual private network 500 and transmitting a message with the terminal device 400A on the basis of UDP that is a connectionless protocol.

### <<4. First embodiments

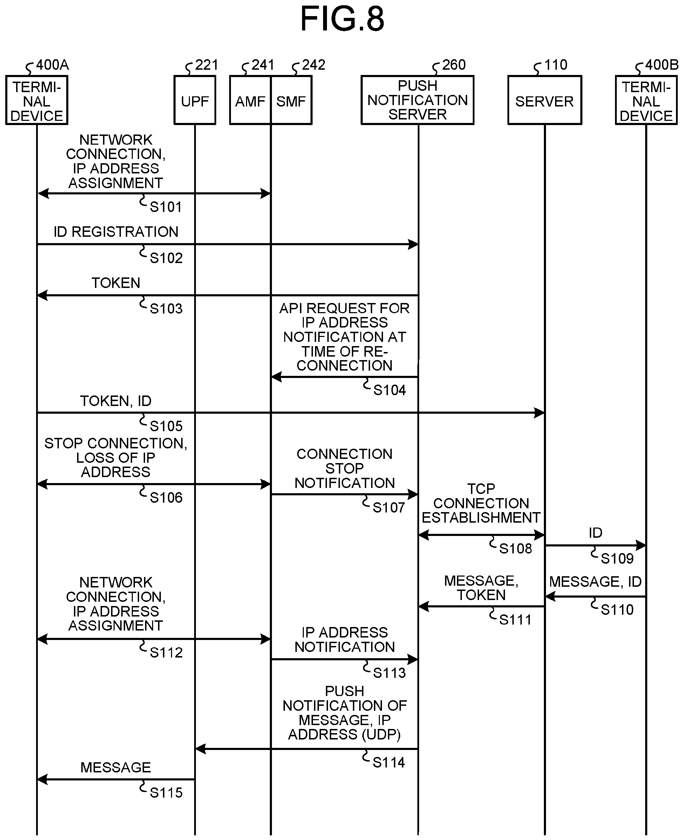

A procedure of the push notification process according to the first embodiment of the present disclosure will be described with reference to FIG. 8. FIG. 8 is a sequence diagram illustrating a procedure of a push communication process according to the first embodiment of the present disclosure. FIG. 8 illustrates the terminal device 400A, the UPF 221, the SMF 242, the AMF 241, the push notification server 260, the application server 110, and the terminal device 400B. For convenience, the application server 110 is abbreviated as a "server". The SMF 242 and the AMF 241 are collectively described as a control plane (C-Plane) in 5G. Note that the UPF 221 corresponds to a user plane (U-Plane) in 5G.

First, the terminal device 400A is connected to the wireless network and the core network 200 (in FIG. 8, it is described as a network) (step S101). At this time, an IP address is allocated from the SMF 242.

Next, the terminal device 400A registers its own ID in the push notification server 260 (step S102). At this time, the IMSI of the terminal device 400A is also registered in the push notification server 260. Next, the push notification server 260 transmits the token to the terminal device 400A as a response to the registration of the ID (step S103).

Next, the push notification server 260 requests (subscription) the SMF 242 to provide a notification of an IP address when the terminal device 400A that has stopped being connected to the network connects to the network again (step S104). The request may be performed by using an IMSI of the terminal device 400A. The API that accepts the request is realized in the SMF 242. The push notification server 260 can make a request through this API.

Next, the terminal device 400A transmits the token and its own ID to the application server 110 (step S105). The application of the application server 110 registers the token and the ID of the terminal device 400A.

Thereafter, when the network connection of the terminal device 400A is stopped (step S106). The IP address assigned in step S101 is lost. Note that the SMF 242 notifies the push notification server 260 of the stop of the network connection of the terminal device 400A (step S107) .

The push notification server 260 establishes a TCP connection with the application server 110 (step S108) . On the other hand, the application of the application server 110 notifies the terminal device 400B subscribing to the same service (message exchange) of the ID of the terminal device 400A (step S109). When the message addressed to the terminal device 400A is generated in the terminal device 400B, the message is transmitted from the terminal device 400B to the application server 110 together with the ID (step S110). The application of the application server 110 grasps the destination terminal device 400A based on the ID attached to the transmitted message. Next, the application of the application server 110 transmits the message and the token of the terminal device 400A to the push notification server 260 (step S111). This transmission is performed by the TCP connection established in step S108. Since the terminal device 400A is not connected to the network, the push notification server 260 holds the transmitted message.

Next, the terminal device 400A is connected to the network again, and a new IP address is assigned (step S112). In response to the request in step S104, the SMF 242 notifies the push notification server 260 of the new IP address (step S113). Note that this notification can be performed using the API(1) described in FIG. 2.

Next, the push notification server 260 performs push notification on the basis of the notified IP address (step S114). Specifically, the push notification server 260 forms an IP header with the notified IP address as a destination network address. Next, the push notification server 260 forms a UDP packet with the IP header and data including a message addressed to the terminal device 400A. Next, the push notification server 260 transmits the UDP packet to the UPF 221. Note that step S114 is an example of performing the push notification described in the claims.

Next, the UPF 221 transmits a message based on the push notification to the terminal device 400A (step S115). Specifically, the UPF 221 forms a virtual communication path with the terminal device 400A, and transmits a UDP packet including a message transmitted by the push notification to the terminal device 400A. Note that the virtual communication path can be configured on the basis of, for example, GTP (General Packet Radio System Tunneling Protocol).

According to the above-described procedure, a message from the terminal device 400B can be transmitted to the terminal device 400A. In response to the request for notification of the IP address when the terminal device 400A that has stopped the connection to the network in step S104 reconnects to the network, the IP address when the terminal device 400A is reconnected can be quickly acquired. As a result, the push notification can be performed at high speed. Note that although a notification is made in step S113 in response to the API request (subscription) in step S104, a request/response type API may be used.

Note that the configuration of the virtual private network 500 is not limited to this example. For example, it is possible to adopt a configuration in which the push notification server 260 further includes a function of a network function (NF) which is an individual function group necessary for the network. In this case, the application arranged in the push notification server 260 can use the API of the entity of the core network 200. Furthermore, for example, a configuration in which the push notification server 260 further includes an application function (AF) function that functions as an application server can be adopted.

Furthermore, the application server 110 can be arranged inside the virtual private network 500. In this case, messages can be exchanged between the push notification server 260 and the application server 110 on the basis of the UDP protocol.

As described above, by arranging the push notification server 260 in the virtual private network 500, it is possible to perform push notification based on a connectionless protocol with the terminal device 400A. As a result, messages can be exchanged by a simple procedure. In addition, the push notification based on the connectionless protocol enables transmission of a low-delay message. In addition, in a case where the push notification server 260 is disposed in the core network 200, an API of an entity of the core network 200 can be used. As a result, the convenience of the push notification server 260 can be improved.

### <<5. Second embodiments

In the first embodiment, even when the terminal device 400A is not connected to the network, the application server 110 transmits the message addressed to the terminal device 400A to the push notification server 260. On the other hand, the application server 110 may wait for the terminal device 400A to be connected to the network and transmit a message addressed to the terminal device 400A to the push notification server 260. This case will be described as a second embodiment. Note that, in the second embodiment, since the virtual private network 500, the core network 200, the base station device 300, the terminal device 400, and the push notification server 260 having the same configurations as those of the first embodiment are used, description of overlapping configurations and operations is omitted.

The push notification server 260 in the first embodiment has been notified of the connected state of the terminal device 400A to the network from the SMF 242. On the other hand, the push notification server 260 of the second embodiment further notifies the application server 110 of the connected state of the terminal device 400A to the network. That is, in a case where the push notification server 260 according to the second embodiment detects a state in which the terminal device 400A is not connected to the network, the push notification server 260 notifies the application server 110 of the state. As a result, the application server 110 can stop transmission of the message to the push notification server 260 while the terminal device 400A is not connected to the network.

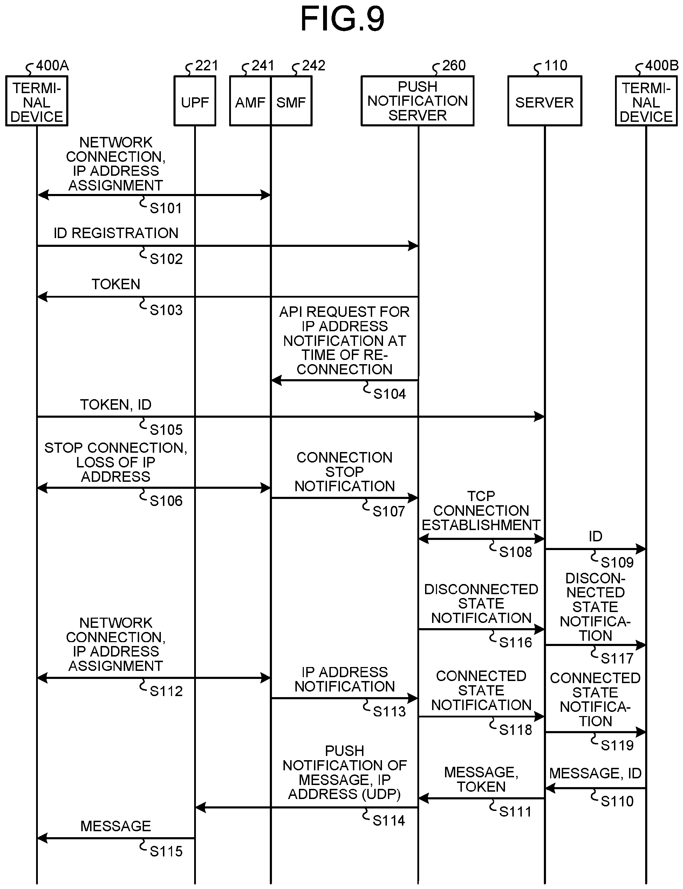

A procedure of the push notification process according to the second embodiment of the present disclosure will be described with reference to FIG. 9. FIG. 9 is a sequence diagram illustrating a procedure of a push communication process according to the second embodiment of the present disclosure. Note that the same reference numerals are applied to the same processes as those in the sequence diagram of FIG. 8, and the description thereof will be omitted.

In step S107, the push notification server 260 is notified of the stop of the network connection of the terminal device 400A. Thereafter, the push notification server 260 establishes a TCP connection with the application server 110 (step S108), and notifies the application server 110 of the disconnected state of the terminal device 400A to the network (step S116). The application of the application server 110 that has received this notification further notifies the terminal device 400B of the disconnected state of the terminal device 400A to the network (step S117).

Thereafter, when the terminal device 400A is connected to the network again and a new IP address is assigned (step S112), the push notification server 260 is notified of the IP address (step S113). The push notification server 260 notifies the application server 110 of the connected state of the terminal device 400A to the network (step S118). The application of the application server 110 notifies the terminal device 400B of the connected state of the terminal device 400A to the network (step S119). On the basis of this notification, the terminal device 400B generates a message addressed to the terminal device 400A and transmits the message to the application server 110 (step S110).

The application of the application server 110 transmits the transmitted message to the push notification server 260 (step 5111). Since the terminal device 400A is connected to the network, the push notification server 260 can immediately perform push notification (step S114).

As described above, the push notification server 260 acquires information on whether or not the terminal device 400A is connected to the network via the SMF 242 that is an entity disposed in the core network 200. In a case where the terminal device 400A is connected to the network, the push notification server 260 acquires the IP address of the terminal device 400A. This IP address corresponds to information on the terminal device 400A for performing push notification. In addition, the push notification server 260 notifies the application of the application server 110 of a state in which the terminal device 400A is connected to the network and has an IP address. That is, the push notification server 260 transmits information on the terminal device 400A to the application server 110 which is a server holding a message for raising the push notification of the terminal device 400A.

While the terminal device 400A is not connected to the network, no message is transmitted from the application server 110, so that the number of messages accumulated in the push notification server 260 decreases. As a result, the capacity of the storage unit 262 of the push notification server 260 can be reduced. In addition, since the application of the application server 110 waits for connection of the terminal device 400A to the network and transmits the message to the push notification server 260, the message can be reliably transmitted to the terminal device 400A.

Note that the procedure of the push notification process according to the second embodiment of the present disclosure is not limited to this example. For example, the application of the application server 110 can omit notification of the disconnected state of the terminal device 400A to the network (step S117). In this case, the message addressed to the terminal device 400A transmitted from the terminal device 400B is held and accumulated in the application server 110.

As described above, the push notification server 260 according to the second embodiment of the present disclosure acquires information as to whether or not it has an IP address as information on the terminal device 400A. As a result, it is possible to determine whether or not the terminal device 400A can receive a message and perform push notification, and convenience can be improved.

### <<6. Third embodiments

In the second embodiment, the push notification server 260 acquires the connected state of the terminal device 400A to the network and transmits the connected state to the application server 110. On the other hand, the connection timing of the terminal device 400A to the network desired by the application server 110 may be designated. This case will be described as a third embodiment. Note that, also in the third embodiment, since the virtual private network 500, the core network 200, the base station device 300, the terminal device 400, and the push notification server 260 having the same configurations as those of the first embodiment are used, description of overlapping configurations and operations is omitted.

The push notification server 260 in the third embodiment sets a connection cycle and a connection period to the network in the terminal device 400A. This setting can be performed, for example, via the AMF 241 which is an entity of the core network 200. Specifically, an API for setting a connection cycle and a connection period to a network can be realized and performed by using the API. The application of the application server 110 may request a connection cycle and a connection period to a desired network from the push notification server 260. The push notification server 260 can set a connection cycle and a connection period to the network in the terminal device 400A based on this request. In a case where a plurality of applications request a connection cycle and a connection period to the network, the push notification server 260 can select a connection time or the like that satisfies the plurality of requests and set the connection time or the like in the terminal device 400A.

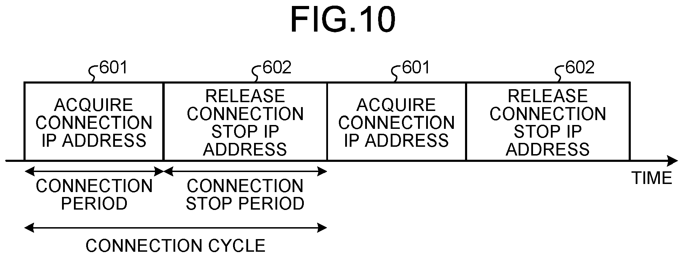

A connection period and a connection period to the network will be described with reference to FIG. 10. FIG. 10 is a diagram illustrating a connection cycle and a connection period to the network according to the third embodiment of the present disclosure. In FIG. 10, connection 601 represents a connection period of the terminal device 400A to the network, and connection stop 602 represents a connection stop period of the terminal device 400A to the network. A period obtained by adding the connection 601 and the connection stop 602 is a connection cycle. During the period of the connection 601, an IP address is allocated to the terminal device 400A. That is, the terminal device 400A in the period of the connection 601 has already acquired the IP address. On the other hand, in the connection stop 602, the IP address allocated to the terminal device 400A is released.

The push notification server 260 can notify the application server 110 of the set connection cycle and connection period of the terminal device 400A to the network. The application of the application server 110 can acquire a period in which the terminal device 400A is connected to the network, and can transmit a message in this period.

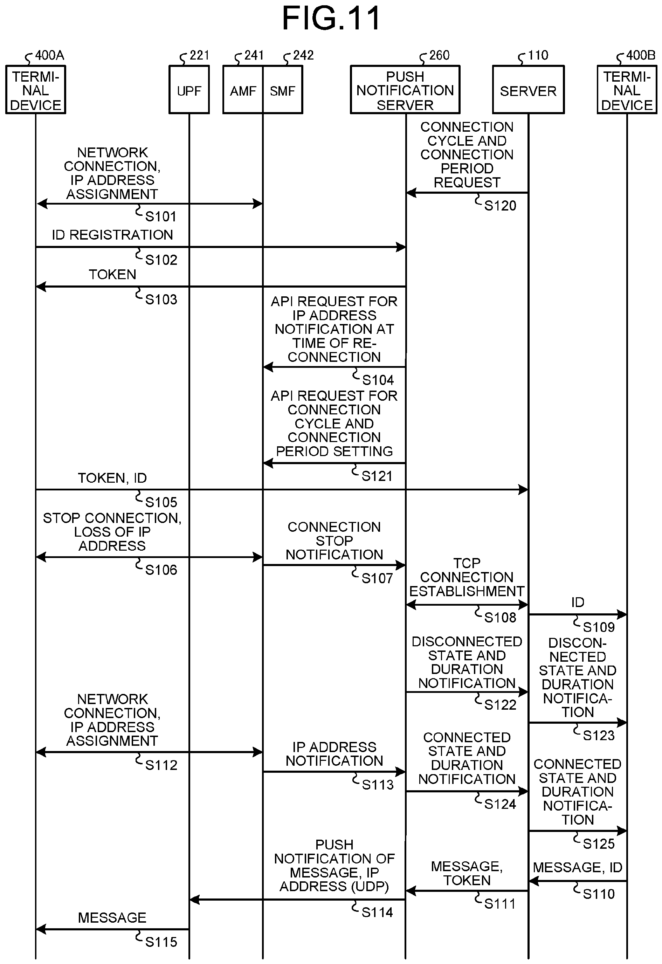

A procedure of a push notification process according to a third embodiment of the present disclosure will be described with reference to FIG. 11. FIG. 11 is a sequence diagram illustrating a procedure of a push communication process according to the third embodiment of the present disclosure. Note that the same reference numerals are applied to the same processes as those in the sequence diagram of FIG. 8, and the description thereof will be omitted.

First, the application of the application server 110 requests the push notification server 260 for a connection cycle and a connection period of the desired terminal device 400A to the network (step S120). On the basis of this request, the push notification server 260 determines a connection cycle and a connection period to the network, and requests the AMF 241 for an API for setting the connection cycle and the connection period to the network (step S121). Thereafter, the AMF 241 sets a connection cycle and a connection period to the network in the terminal device 400A using the API(not illustrated).

In step S107, the push notification server 260 is notified of the stop of the network connection of the terminal device 400A. The push notification server 260 establishes a TCP connection with the application server 110 (step S108), and notifies the application server 110 of a disconnected state and duration of the terminal device 400A to the network (step S122). The duration of the disconnected state can be calculated from the connection cycle and the connection period. The application of the application server 110 that has received this notification further notifies the terminal device 400B of the disconnected state from the network of the terminal device 400A and the duration thereof (step S123).

Thereafter, when the terminal device 400A is connected to the network again and a new IP address is assigned (step S112), the push notification server 260 is notified of the IP address (step S113). The push notification server 260 notifies the application server 110 of the connected state and the duration of the terminal device 400A to the network (step S124). The application of the application server 110 notifies the terminal device 400B of the connected state and the connection period of the terminal device 400A to the network (step S125). The terminal device 400B transmits a message addressed to the terminal device 400A during the notified connection period of the terminal device 400A to the network (step S110).

The application of the application server 110 transmits the transmitted message to the push notification server 260 (step 5111). Since the terminal device 400A is connected to the network, the push notification server 260 can immediately perform push notification (step S114).

As described above, the push notification server 260 acquires the cycle and the connection period in which the terminal device 400A is connected to the network via the AMF 241 which is an entity disposed in the core network 200. The connection cycle and the connection period of the terminal device 400A to the network correspond to information on a period during which the terminal device 400A is connected to the core network 200, and correspond to information on the terminal device 400A for performing push notification.

In addition, the push notification server 260 transmits information on a period during which the terminal device 400A is connected to the core network 200 to the application of the application server 110. Since the application of the application server 110 can transmit a message to the push notification server 260 during a period in which the terminal device 400A is connected to the network, the timing of message transmission can be optimized. In addition, the terminal device 400A can control power on and off on the basis of the set connection cycle and connection period, and can reduce power consumption while reliably receiving messages.

Note that the procedure of the push notification process according to the third embodiment of the present disclosure is not limited to this example. For example, the application of the application server 110 can omit notification of the disconnected state of the terminal device 400A to the network (step S123). In this case, the message addressed to the terminal device 400A transmitted from the terminal device 400B is held and accumulated in the application server 110.

As described above, the push notification server 260 according to the third embodiment of the present disclosure acquires the connection cycle and the connection period to the network as the information on the terminal device 400A. As a result, it is possible to perform the push notification in a period in which the terminal device 400A can receive the message, and convenience can be further improved.

### <<7. Fourth Embodiments

In the second embodiment, the push notification server 260 acquires the connected state of the terminal device 400A to the network and transmits the connected state to the application server 110. On the other hand, information on connection of the terminal device 400A to the base station device 300 may be acquired. This case will be described as a fourth embodiment. Note that, also in the fourth embodiment, since the virtual private network 500, the core network 200, the base station device 300, the terminal device 400, and the push notification server 260 having the same configurations as those of the first embodiment are used, description of overlapping configurations and operations is omitted.

The terminal device 400A can take a standby state (Idle) in which radio resources are released in addition to a connected state (Connected) in which radio resources are allocated, a link with the base station device 300 is established, and transmission and reception are possible. By setting the standby state, the power consumption of the terminal device 400A can be reduced. The terminal device 400A transitions from the standby state to the connected state as necessary to perform communication. The push notification and the message need to be received when the terminal device 400A is in a connected state with the base station device 300. The transition from the standby state to the connected state can be performed by transmitting a message from the base station device 300 to the terminal device 400A. As described above in FIG. 2, this message is referred to as a paging message (Paging Message). The base station device 300 can transmit the paging message to the terminal device 400A in a predetermined cycle. Note that the connected state of the terminal device 400A is also referred to as an RRC connected state (Radio Resource Control Connected).

The push notification server 260 in the fourth embodiment acquires information on connection of the terminal device 400A to the base station device 300, for example, whether or not transition from the standby state to the connected state has been made. This can be done, for example, using an API of the AMF 241, which is an entity of core network 200. In this API, an ID such as an IMSI is designated in order to identify the terminal device 400A.

The acquired connection information on the terminal device 400A to the base station device 300 can be notified to the application server 110. The application of the application server 110 can transmit a message when the terminal device 400A is in a connected state with the base station device 300.

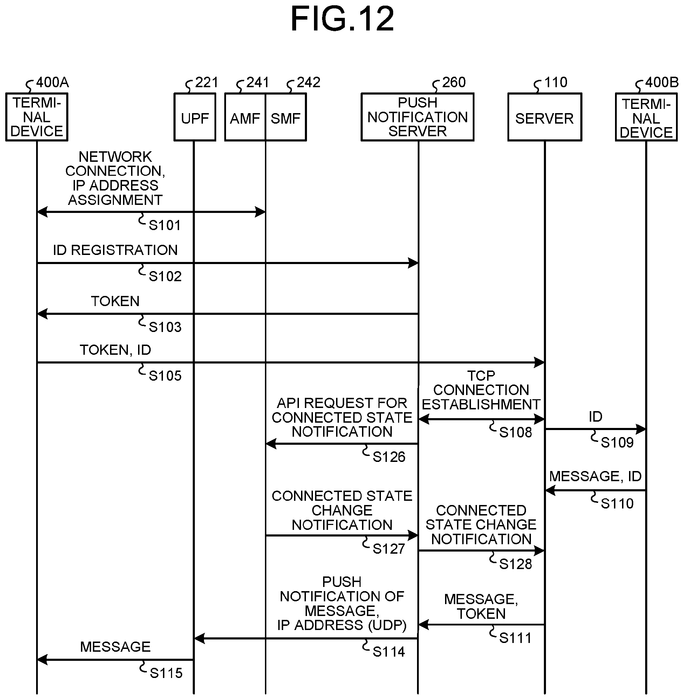

A procedure of the push notification process according to the fourth embodiment of the present disclosure will be described with reference to FIG. 12. FIG. 12 is a sequence diagram illustrating a procedure of a push communication process according to the fourth embodiment of the present disclosure. Note that the same reference numerals are applied to the same processes as those in the sequence diagram of FIG. 8, and the description thereof will be omitted.

In step S108, the push notification server 260 establishes a TCP connection with the application server 110. Next, the push notification server 260 requests the AMF 241 for an API for notifying the connected state of the terminal device 400A to the base station device 300 (step S126). Thereafter, a notification that the terminal device 400A transitions from the standby state to the connected state with the base station device 300 and the state changes is notified from the AMF 241 to the push notification server 260 (step S127). The push notification server 260 notifies the application server 110 of the change in the connected state of the terminal device 400A (step S128). Based on this notification, the application of the application server 110 transmits a message to the push notification server 260 (step Sill). Since the terminal device 400A is in the connected state with the base station device 300, the push notification server 260 can immediately perform the push notification (step S114).

Note that, in the processing of FIG. 12, the push notification server 260 requests the AMF 241 for an API for notifying the connected state of the terminal device 400A to the base station device 300, and the AMF 241 notifies the change in the connected state of the terminal device 400A. On the other hand, a request/response type API can also be used. For this API, the API(2) described in FIG. 2 can be used.

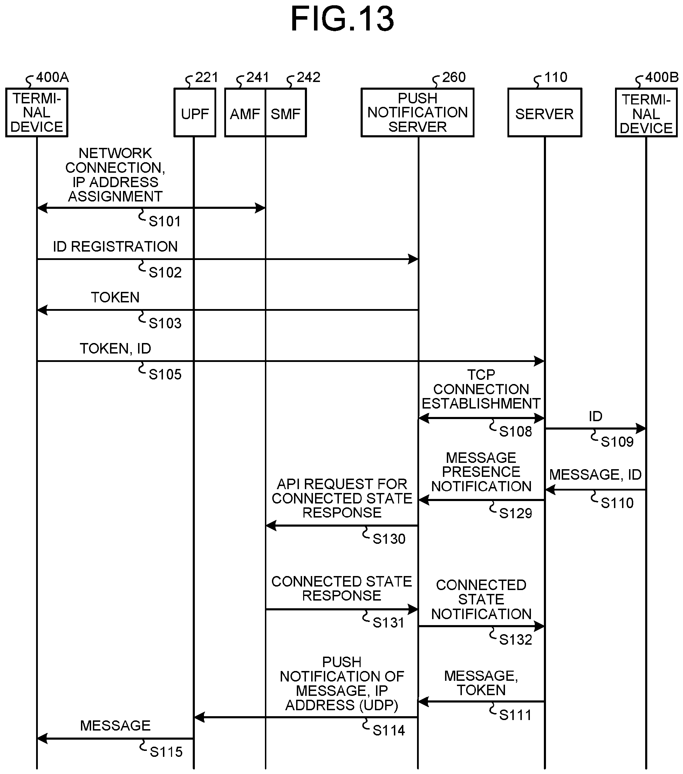

With reference to FIG. 13, a procedure in the case of using a request/response type API will be described. FIG. 13 is a sequence diagram illustrating another procedure of the push communication process according to the fourth embodiment of the present disclosure. Note that the same reference numerals are applied to the same processes as those in the sequence diagram of FIG. 12, and the description thereof will be omitted.

In step S108, the push notification server 260 establishes a TCP connection with the application server 110. Next, the application of the application server 110 notifies the push notification server 260 that there is a message addressed to the terminal device 400A (step S129). The push notification server 260 requests the AMF 241 for an API for responding a connected state of the terminal device 400A to the base station device 300 (step S130). When the terminal device 400A transitions from the standby state to the connected state with the base station device 300, the AMF 241 makes a response of the connected state (step S131). The push notification server 260 notifies the application server 110 of the connected state of the terminal device 400A (step S132). Based on this notification, the application of the application server 110 transmits a message to the push notification server 260 (step Sill). Since the terminal device 400A is in the connected state with the base station device 300, the push notification server 260 can immediately perform the push notification (step S114).

When the message exists in the application server 110, the application of the application server 110 can request the push notification server 260 to acquire the state of connection of the terminal device 400A to the base station device 300. In addition, in a case where there is a plurality of application servers 110 that transmit messages and the like to the terminal device 400A, the push notification server 260 can request an API from the AMF 241 in response to requests from the plurality of applications. For example, it is possible to adopt a configuration in which the push notification server 260 requests the AMF 241 for an API in a case where a plurality of requests arrives from an application. When the terminal device 400A is in the connected state with the base station device 300, a plurality of applications are notified that messages can be exchanged.

Note that the processing of FIG. 13 is an application in which the application of the application server 110 exchanges an instant message, but may be a game application.

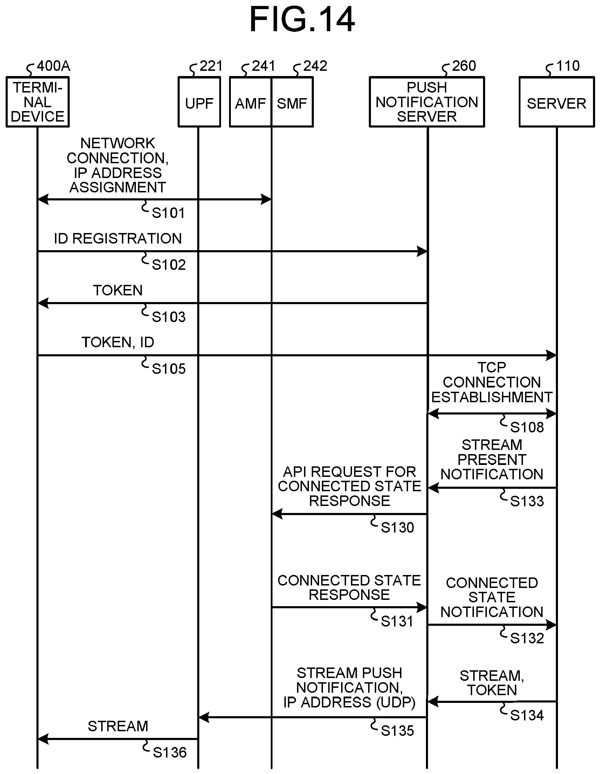

With reference to FIG. 14, a procedure when applied to a game application will be described. FIG. 14 is a sequence diagram illustrating another procedure of the push communication process according to the fourth embodiment of the present disclosure. In FIG. 14, the terminal device 400B is deleted. Furthermore, an application of a game for transmitting a video stream is assumed as an application of the application server 110. Note that the same reference numerals are applied to the same processes as those in the sequence diagram of FIG. 13, and the description thereof will be omitted.

In step S108, the push notification server 260 establishes a TCP connection with the application server 110. Next, when the application of the application server 110 notifies the push notification server 260 that there is a stream addressed to the terminal device 400A (step S133). The push notification server 260 requests the AMF 241 for an API for responding a connected state of the terminal device 400A to the base station device 300 (step S130). When the terminal device 400A transitions from the standby state to the connected state with the base station device 300, the AMF 241 makes a response of the connected state (step S131).

The push notification server 260 notifies the application server 110 of the connected state of the terminal device 400A (step S132). Based on this notification, the application of the application server 110 transmits the stream to the push notification server 260 (step S134). The push notification server 260 performs push notification of a stream on the basis of the UDP protocol (step S135). The UPF 221 transmits the stream to the terminal device 400A (step S136).

In this manner, the push notification server 260 can also perform push notification for data other than messages.

As described above, the push notification server 260 acquires the information on the connected state of the terminal device 400A with the base station device 300 as the information on the connection of the terminal device 400A with the base station device 300. By transmitting a message or the like to the terminal device 400A in this connected state, it is possible to collectively transmit the message or the like. Since the terminal device 400A waits for the connected state with the base station device 300 and transmits a message or the like, it is possible to transmit the message or the like without increasing the number of transitions of the terminal device 400A to the connected state.

Note that information indicating that there is an instant message addressed to the terminal device 400A can be placed in the paging message. As a result, the terminal device 400A in the standby state can know the presence of the instant message.

Furthermore, as described above, the paging message is transmitted to the terminal device 400A in a predetermined cycle. The push notification server 260 can also acquire information on the time when the paging message is transmitted. This may be done, for example, by implementing an API in the AMF 241 to obtain the cycle at which paging messages are transmitted and using this API by the push notification server 260. The push notification server 260 may obtain, based on the obtained cycle, when the paging message is sent. As a result, the push notification server 260 can grasp the timing at which the terminal device 400A can be in the connected state with the base station device 300. The push notification server 260 can also notify the application server 110 of the timing at which the terminal device 400A enters the connected state. The application of the application server 110 can prepare transmission of the message addressed to the terminal device 400A on the basis of this timing, and the efficiency of message transmission can be improved. Note that the AMF 241 is an example of an entity described in the claims.

As described above, the push notification server 260 according to the fourth embodiment of the present disclosure acquires information on connection of the terminal device 400A to the base station device 300. It is possible to perform push notification and transmission of a message on the basis of the acquired information of connection of the terminal device 400A to the base station device 300, and convenience can be improved.

### <8. Fifth Embodiment>

In the fourth embodiment, information on the connected state of the terminal device 400A with the base station device 300 is acquired, and a message or the like is transmitted after the terminal device 400A transitions to the connected state with the base station device 300. On the other hand, when the terminal device 400A is in the standby state, the terminal device 400A may be caused to transition to the connected state and transmit the message. This case will be described as a fifth embodiment. Note that, also in the fifth embodiment, since the virtual private network 500, the core network 200, the base station device 300, the terminal device 400, and the push notification server 260 having the same configurations as those of the first embodiment are used, description of overlapping configurations and operations is omitted.

The push notification server 260 in the fifth embodiment can cause the terminal device 400A in a standby state to transmit a paging message by using the API(3) described in FIG. 2.

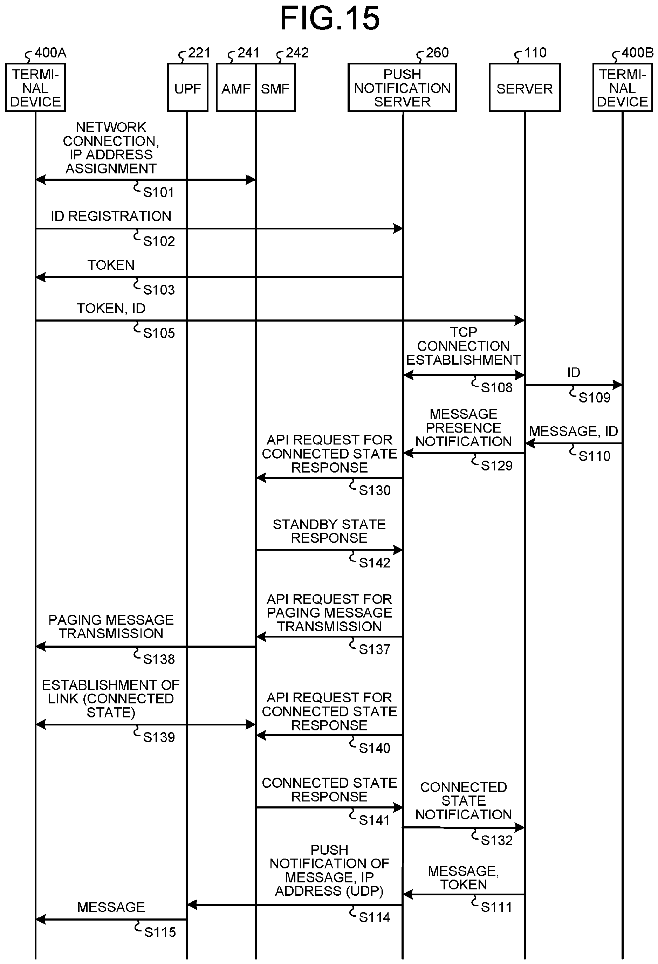

With reference to FIG. 15, a procedure of a push notification process according to a fifth embodiment of the present disclosure will be described. FIG. 15 is a sequence diagram illustrating a procedure of a push communication process according to the fifth embodiment of the present disclosure. Note that the same reference numerals are applied to the same processes as those in the sequence diagram of FIG. 13, and the description thereof will be omitted.

In a case where the response of the standby state is returned in response to the request of the API for responding the connected state of the terminal device 400A to the base station device 300 with respect to the AMF 241 in step S130 (step S142), the push notification server 260 requests the API for paging message transmission to the terminal device 400A (step S137). On the basis of this request, the AMF 241 causes the base station device 300 (not illustrated) to transmit a paging message to the terminal device 400A (step S138). A link is established between the terminal device 400A and the base station device 300 on the basis of the paging message (step S139). Accordingly, the terminal device 400A transitions to the connected state with the base station device 300.

Thereafter, when an API request for responding the connected state of the terminal device 400A to the base station device 300 is issued from the push notification server 260 (step S140), the AMF 241 responds the connected state (step S141). The application server 110 is notified of the connected state of the terminal device 400A (step S132), and a message is transmitted (step S111).

In the processing of FIG. 15, the application server 110 is notified after confirming that the terminal device 400A is in the connected state with the base station device 300. On the other hand, in a case where it is possible to estimate the time from the transmission of the paging message to the terminal device 400A to the transition to the connected state, the message can be transmitted without waiting for confirmation of the connected state of the terminal device 400A. Specifically, after a lapse of a predetermined time (estimated time) from the transmission of the paging message to the terminal device 400A, the application server 110 transmits a message (instant message) to the push notification server 260.

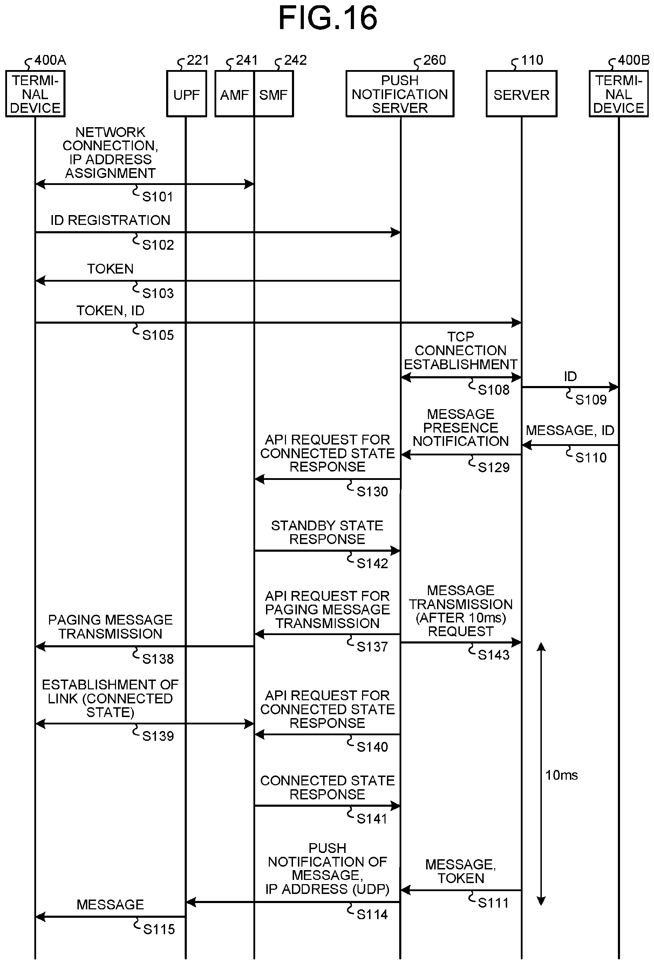

With reference to FIG. 16, a procedure in a case where a message is transmitted to the push notification server 260 after a predetermined time elapses from transmission of a paging message will be described. FIG. 16 is a sequence diagram illustrating another procedure of the push communication process according to the fifth embodiment of the present disclosure. The processing of FIG. 16 is based on the assumption that the message is transmitted to the push notification server 260 10 ms after the transmission of the paging message. Note that the same reference numerals are applied to the same processes as those in the sequence diagram of FIG. 15, and the description thereof will be omitted.

In step S137, the push notification server 260 requests an API for paging message transmission to the terminal device 400A. At that time, the push notification server 260 requests the application of the application server 110 to transmit a message after 10 ms (step S143). After 10 ms, the application of the application server 110 sends a message to the push notification server 260 (step S111). Since the terminal device 400A is in a connected state with the base station device 300, the push notification server 260 immediately performs push notification (step S114). As compared with the case of FIG. 15, it is possible to quickly transmit a message from the application server 110.

As described above, when the terminal device 400A is in the standby state, the push notification server 260 transitions to the connected state and transmits the message. It is possible to reduce message retention in the application server 110 or the like. An increase in the buffer capacity of data in the application server 110 or the like can be prevented. In a case where the application of the application server 110 is an application that transmits a still image or a moving image, a remarkable effect is obtained.

As described above, the push notification server 260 according to the fifth embodiment of the present disclosure shifts the terminal device 400A to the connected state and performs push notification. As a result, it is possible to prevent a message from being held and to shorten a delay of message transmission.

### <9. Sixth embodiment>

In the first embodiment, one UPF 221 is disposed in the core network 200. On the other hand, a plurality of UPFs 221 can be arranged in the core network 200. This is to distribute processing of the UPF 221 in a case where a large number of terminal devices 400 are arranged. This case will be described as a sixth embodiment.

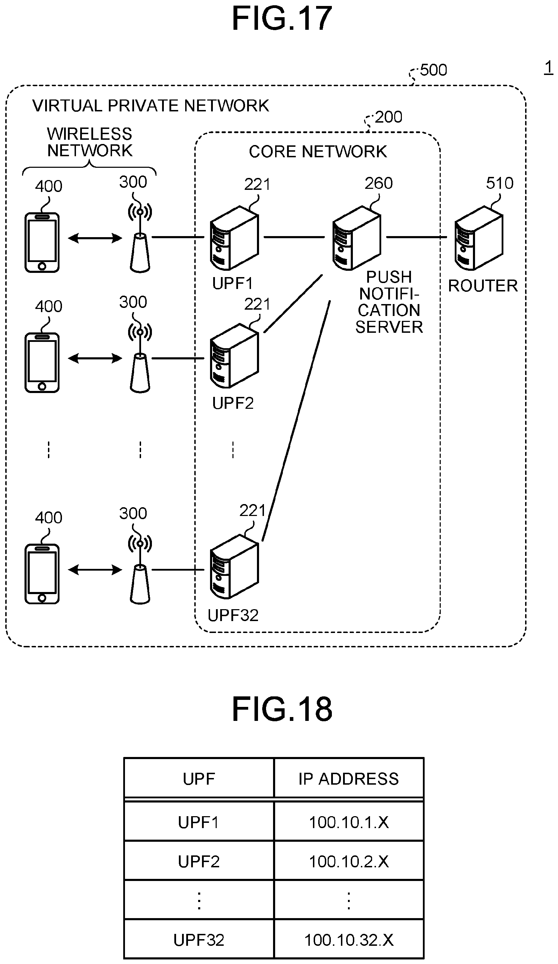

A communication system 1 according to a sixth embodiment of the present disclosure will be described with reference to FIG. 17. FIG. 17 is a diagram illustrating a communication system according to a sixth embodiment of the present disclosure in a simplified manner. The core network 200 in FIG. 17 illustrates an example in which 32 UPFs 221 (UPF 1 to UPF 32) are arranged. The base station device 300 and the terminal device 400 are connected to the UPF 221. In FIG. 17, the description of the AMF 241 and the SMF 242 is omitted.

The push notification server 260 in the sixth embodiment selects a plurality of UPFs 221 and performs push notification. This selection can be performed by acquiring a correspondence relationship between the terminal device 400 and the UPF 221 and grasping which UPF 221a desired terminal device 400 is connected to.

The correspondence between the terminal device 400 and the UPF 221 according to the sixth embodiment of the present disclosure will be described with reference to FIG. 18. FIG. 18 is a diagram illustrating correspondence between the terminal device and the UPF according to the sixth embodiment of the present disclosure. In FIG. 18, "UPF 1" to "UPF 32" correspond to the 32 UPFs 221 described in FIG. 17. The "IP address" represents a range of global IP addresses assigned to the terminal devices 400 connected to the UPF 221. In "X" of the fourth 8-bit address in the "IP address" field in FIG. 18, a different address is set for each terminal device 400.

In addition, 32 UPFs 221 are identified by the third 8-bit address. The push notification server 260 can recognize to which UPF 221 the terminal device 400 is connected by the third 8-bit address of the IP address. With this correspondence between the terminal device and the UPF, the push notification server 260 can select one of the plurality of UPFs 221 to perform push notification.

Since the procedure of the push notification process is similar to that in FIG. 8, the description thereof will be omitted. Note that the UPF 221 is an example of a UPF entity described in the claims.

As described above, in the sixth embodiment of the present disclosure, in a case where a plurality of UPFs 221 is arranged in the core network 200, the correspondence relationship between the terminal device 400 and the UPF 221 is set in advance. The push notification server 260 selects the UPF 221 on the basis of the set correspondence between the terminal device 400 and the UPF 221 and performs push notification. As a result, the push notification can be performed in the virtual private network 500 having the core network 200 in which the plurality of UPFs 221 is arranged.

Note that the configuration of the sixth embodiment of the present disclosure can be applied to other embodiments. Specifically, the sequences illustrated in FIGS. 8, 9, and 11 to 16 can also be applied in a case where a plurality of UPFs 221 is arranged in the core network 200.

### (Effects)

The information processing device (the push notification server 260) of the present disclosure is disposed in a local area network LAN including a base station device 300 to which the terminal device 400 is connected and a core network 200, and has a function of performing push notification to the terminal device 400 on the basis of a connectionless protocol.

As a result, the push notification can be performed on the basis of the connectionless protocol. It is possible to exchange messages and the like by a simple procedure.

Furthermore, the LAN may be the virtual private network 500.

As a result, in the virtual private network 500, the push notification can be performed on the basis of the connectionless protocol.

In addition, the connectionless protocol may be a user datagram protocol (UDP).

As a result, the push notification can be performed on the basis of UDP.

Furthermore, the information processing device (the push notification server 260) may be disposed in the core network 200.

As a result, the information processing device (the push notification server 260) can be used as an entity of the core network 200.

Furthermore, the information processing device (the push notification server 260) may further have a function as an application function of the core network 200.

This can simplify interaction between the application and the push notification server.

Furthermore, the information processing device (the push notification server 260) may further have a function as a network function of the core network 200.

As a result, the information processing device (the push notification server 260) can use the API of the entity of the core network 200.

Furthermore, the information processing device (the push notification server 260) may acquire information on the terminal device 400 for performing push notification via an entity (the AMF 241) arranged in the core network 200.

As a result, the information on the terminal device 400 can be acquired using the entity arranged in the core network 200.

Further, the information on the terminal device 400 may be acquired by an application programming interface (API) of the entity.

As a result, the information on the terminal device 400 can be acquired using the API of the entity.

In addition, the acquired information on the terminal device 400 may be transmitted to a server (the application server 110) that holds a message addressed to the terminal device 400 that initiates the push notification.

As a result, the application of the application server 110 can use the information on the terminal device 400.

Further, the information on the terminal device 400 may be an Internet protocol address (IP address).

As a result, the application of the application server 110 can use the IP address of the terminal device 400.

Furthermore, the information on the terminal device 400 may be information on whether or not the terminal device 400 has an IP address.

As a result, the application of the application server 110 can acquire whether the terminal device 400 is connected to the network.

Furthermore, the information on the terminal device 400 may be information on a period during which the terminal device 400 is connected to the core network 200.

As a result, the push notification server 260 can perform the push notification in a period in which the terminal device 400 is connected to the network.

Furthermore, the information on the terminal device 400 may be information on connection of the terminal device 400 to the base station device 300.

As a result, the push notification server 260 can acquire the connected state between the terminal device 400 and the base station device 300.

Furthermore, the information on the terminal device 400 may be information for transition from a standby state to a connected state in which the terminal device 400 can transmit and receive data to and from the base station device 300.

As a result, the push notification server 260 can perform push notification when the terminal device 400 and the base station device 300 are in a connected state.

Furthermore, the information on the terminal device 400 may be information on a time when a message for causing the terminal device 400 to transition from the standby state to the connected state is transmitted to the terminal device.

As a result, the push notification server 260 can predict the timing at which the terminal device 400 transitions to the connected state.

Furthermore, control may be further performed to cause the terminal device 400 to transmit a message for causing the terminal device 400 to transition from the standby state to the connected state.

As a result, the push notification server 260 can transition the terminal device 400 to the connected state to perform push notification.

Further, the core network 200 may include a plurality of user plane function (UPF) entities (the UPF 221) connected to the terminal device 400 and performing transmission/reception process, and may further include a function of holding information of the UPF entities (the UPF 221) connected to the terminal device 400 when the terminal device performs push notification via any one of the plurality of UPF entities (the UPF 221).

As a result, even in a case where a plurality of UPFs 221 is arranged, the UPF 221 connected to the desired terminal device 400 can be selected.

In addition, a message may be transferred to and from a server (the application server 110) that is disposed outside the LAN and holds a message addressed to the terminal device 400 that initiates a push notification, on the basis of a transmission control protocol.

As a result, a secure message can be transferred to the application server 110 disposed outside the LAN.

In addition, a message may be transferred to a server (the application server 110) that is disposed inside the LAN and holds a message addressed to the terminal device 400 that initiates a push notification, on the basis of a connectionless protocol.

As a result, it is possible to transfer a simple message to the application server 110 arranged inside the LAN.

Furthermore, the information processing method of the present disclosure includes performing push notification to the terminal device 400 on the basis of a connectionless protocol by an information processing device (the push notification server 260) arranged in a LAN including the base station device 300 to which the terminal device 400 is connected and the core network 200.

As a result, the push notification can be performed on the basis of the connectionless protocol. It is possible to exchange messages and the like by a simple procedure.

Furthermore, the communication system of the present disclosure includes: the terminal device 400; and the information processing device (the push notification server 260) that is disposed in a LAN including the base station device 300 to which the terminal device 400 is connected and the core network 200 and has a function of performing push notification to the terminal device 400 on the basis of a connectionless protocol.

As a result, the push notification can be performed on the basis of the connectionless protocol. It is possible to exchange messages and the like by a simple procedure.

In addition, the entity of the present disclosure causes the information processing device (the push notification server 260) to use an API for notifying information on the time when a message for causing the terminal device 400 and the base station device 300 to transition to a connected state is transmitted to the terminal device 400 in order for the information processing device (the push notification server 260) arranged in a LAN including the base station device 300 and the core network 200 to which the terminal device 400 is connected and having a function of performing push notification to the terminal device 400 on the basis of a connectionless protocol to perform push notification.

As a result, the push notification server 260 can predict when the terminal device 400 will be in a connected state with the base station device 300.

Furthermore, the effects of each embodiment described in the present specification are merely examples and are not limited, and other effects may be provided.

Note that the present technology can also have the following configurations.
(1) An information processing device that is disposed in a local area network (LAN) including a base station device to which a terminal device is connected and a core network, and has a function of performing push notification to the terminal device on the basis of a connectionless protocol.
(2) The information processing device according to the above (1), wherein
   the LAN is a virtual private network.
(3) The information processing device according to the above (1) or (2), wherein
   the connectionless protocol is a user datagram protocol (UDP).
(4) The information processing device according to any one of the above (1) to (3), wherein
   the information processing device is disposed in the core network.
(5) The information processing device according to the above (4), further having a function as an application function of the core network.
(6) The information processing device according to the above (4), further having a function as a network function of the core network.
(7) The information processing device according to any one of the above (1) to (6), wherein
   information on the terminal device for performing the push notification is acquired via an entity disposed in the core network.
(8) The information processing device according to the above (7), wherein
   information on the terminal device is acquired by an application programming interface (API) of the entity.
(9) The information processing device according to the above (7), wherein
   the acquired information on the terminal device is transmitted to a server holding a message addressed to the terminal device that initiates the push notification.
(10) The information processing device according to the above (7), wherein
   the information on the terminal device is an Internet protocol address (IP address).
(11) The information processing device according to the above (7), wherein
   the information on the terminal device is information on whether or not the terminal device has an IP address.
(12) The information processing device according to the above (7), wherein
   the information on the terminal device is information of a period in which the terminal device is connected to the core network.
(13) The information processing device according to the above (7), wherein
   the information on the terminal device is information on connection of the terminal device to the base station device.
(14) The information processing device according to the above (13), wherein
   the information on the terminal device is information for the terminal device to transition from a standby state to a connected state in which the terminal device can transmit and receive data to and from the base station device.
(15) The information processing device according to the above (14), wherein
   the information on the terminal device is information on a time when a message for causing the terminal device to transition from the standby state to the connected state is transmitted to the terminal device.
(16) The information processing device according to the above (14), further performing control to cause the terminal device to transmit a message for causing the terminal device to transition from the standby state to the connected state.
(17) The information processing device according to any one of the above (1) to (16), wherein
   the core network includes a plurality of user plane function (UPF) entities that are connected to a terminal device and perform transmission/reception processing, and the information processing device further has a function of holding information on the UPF entity connected to the terminal device in a case where the terminal device performs the push notification via any one of the plurality of UPF entities.
(18) The information processing device according to any one of the above (1) to (17), wherein
   the message is transferred to and from a server that is disposed outside the LAN and holds a message addressed to the terminal device that initiates the push notification, on the basis of a transmission control protocol.
(19) The information processing device according to any one of the above (1) to (17), wherein
   the message is transferred to and from a server that is disposed inside the LAN and holds a message addressed to the terminal device that initiates the push notification, on the basis of the connectionless protocol.
(20) An information processing method comprising:
   performing push notification to a terminal device on the basis of a connectionless protocol by an information processing device disposed in a LAN including a base station device to which the terminal device is connected and a core network.
(21) A communication system comprising:
   a terminal device; and
   an information processing device that is disposed in a LAN including a base station device to which the terminal device is connected and a core network and has a function of performing push notification to the terminal device on the basis of a connectionless protocol.
(22) An entity that causes an information processing device to use an API that notifies information on a time at which a message for transitioning a terminal device and a base station device to a connected state is transmitted to the terminal device in order for the information processing device to perform push notification to the terminal device, the information processing device being disposed in a LAN including the base station device to which the terminal device is connected and a core network and having a function of performing the push notification to the terminal device on the basis of a connectionless protocol.

### Reference Signs List

1 COMMUNICATION SYSTEM
110 APPLICATION SERVER (INFORMATION PROCESSING DEVICE)
200, 200A, 200B CORE NETWORK
221 UPF
241 AMF
242 SMF
260, 260A, 260B PUSH NOTIFICATION SERVER (INFORMATION PROCESSING DEVICE)
300, 300A, 300B BASE STATION DEVICE
400, 400A, 400B TERMINAL DEVICE
500 VIRTUAL PRIVATE NETWORK (LAN)

## Claims

1. An information processing device that is disposed in a local area network (LAN) including a base station device to which a terminal device is connected and a core network, and has a function of performing push notification to the terminal device on the basis of a connectionless protocol.

2. The information processing device according to claim 1, wherein
the LAN is a virtual private network.

3. The information processing device according to claim 1, wherein
the connectionless protocol is a user datagram protocol (UDP).

4. The information processing device according to claim 1, wherein
the information processing device is disposed in the core network.

5. The information processing device according to claim 4, further having a function as an application function of the core network.

6. The information processing device according to claim 4, further having a function as a network function of the core network.

7. The information processing device according to claim 1, wherein
information on the terminal device for performing the push notification is acquired via an entity disposed in the core network.

8. The information processing device according to claim 7, wherein
information on the terminal device is acquired by an application programming interface (API) of the entity.

9. The information processing device according to claim 7, wherein
the acquired information on the terminal device is transmitted to a server holding a message addressed to the terminal device that initiates the push notification.

10. The information processing device according to claim 7, wherein
the information on the terminal device is an Internet protocol address (IP address).

11. The information processing device according to claim 7, wherein
the information on the terminal device is information on whether or not the terminal device has an IP address.

12. The information processing device according to claim 7, wherein
the information on the terminal device is information of a period in which the terminal device is connected to the core network.

13. The information processing device according to claim 7, wherein
the information on the terminal device is information on connection of the terminal device to the base station device.

14. The information processing device according to claim 13, wherein
the information on the terminal device is information for the terminal device to transition from a standby state to a connected state in which the terminal device can transmit and receive data to and from the base station device.

15. The information processing device according to claim 14, wherein
the information on the terminal device is information on a time when a message for causing the terminal device to transition from the standby state to the connected state is transmitted to the terminal device.

16. The information processing device according to claim 14, further performing control to cause the terminal device to transmit a message for causing the terminal device to transition from the standby state to the connected state.

17. The information processing device according to claim 1, wherein
the core network includes a plurality of user plane function (UPF) entities that are connected to a terminal device and perform transmission/reception processing, and the information processing device further has a function of holding information on the UPF entity connected to the terminal device in a case where the terminal device performs the push notification via any one of the plurality of UPF entities.

18. The information processing device according to claim 1, wherein
the message is transferred to and from a server that is disposed outside the LAN and holds a message addressed to the terminal device that initiates the push notification, on the basis of a transmission control protocol.

19. The information processing device according to claim 1, wherein
the message is transferred to and from a server that is disposed inside the LAN and holds a message addressed to the terminal device that initiates the push notification, on the basis of the connectionless protocol.

20. An information processing method comprising:
performing push notification to a terminal device on the basis of a connectionless protocol by an information processing device disposed in a LAN including a base station device to which the terminal device is connected and a core network.

21. A communication system comprising:
a terminal device; and
an information processing device that is disposed in a LAN including a base station device to which the terminal device is connected and a core network and has a function of performing push notification to the terminal device on the basis of a connectionless protocol.

22. An entity that causes an information processing device to use an API that notifies information on a time at which a message for transitioning a terminal device and a base station device to a connected state is transmitted to the terminal device in order for the information processing device to perform push notification to the terminal device, the information processing device being disposed in a LAN including the base station device to which the terminal device is connected and a core network and having a function of performing the push notification to the terminal device on the basis of a connectionless protocol.
